# EUROPEAN PATENT APPLICATION

(11) **EP 4 387 374 A1**
(43) Date of publication of application: **19.06.2024**
(21) Application number: 22863487.9
(22) Date of filing: 31.08.2022
(51) Int. Cl.: H04W 76/10, H04W 4/38

(54) **METHOD AND APPARATUS FOR TRANSMITTING SENSING DATA, AND SYSTEM**

(30) Priority: 01.09.2021 CN 202111022667
(71) Applicant: Huawei Technologies Co., Ltd., Shenzhen, Guangdong 518129 (CN)
(72) Inventor: YING, Jiangwei, Shenzhen, Guangdong 518129 (CN); ZHANG, Wanqiang, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2022/116024
(87) International publication number: WO 2023/030352

(57) **Abstract**

This application provides a sensory data transmission method. The method includes: A first sensing network element sends first address information of the first sensing network element to a second sensing network element. The first address information is used to establish a first data channel for transmitting sensory data between the first sensing network element and the second sensing network element. The first sensing network element sends a first request message to the second sensing network element. The first request message is used to request the second sensing network element to perform a first sensing operation. The first sensing network element receives first data information that is sent by the second sensing network element through the first data channel. The first data information is generated by the second sensing network element by performing the first sensing operation based on the first request message. In this way, a transmission rate and reliability of sensory data transmission can be improved.

## Description

This application claims priority to Chinese Patent Application No. 202111022667.8, filed with the China National Intellectual Property Administration on September 1, 2021 and entitled "SENSORY DATA TRANSMISSION METHOD, APPARATUS, AND SYSTEM", which is incorporated herein by reference in its entirety.

### TECHNICAL FIELD

This application relates to the field of communication technologies, and more specifically, to a sensory data transmission method and an apparatus.

### BACKGROUND

With the upgrade of mobile communication technologies, a communication network is to be constructed in a flexible and efficient manner. A communication sensing capability may be used as a new capability in the communication network. For example, when an access network device performs wireless communication by using a millimeter-wave band, the access network device naturally has a sensing capability similar to that of a radar. In other words, the access network device has both a wireless communication capability and a sensing recognition capability. However, how the access network device reports sensory data is still in an exploration phase. This application provides a sensory data transmission method, to improve reliability of sensory data transmission.

### SUMMARY

In this application, a sensory data transmission method and an apparatus are provided, to implement reliable transmission of sensory data.

According to a first aspect, a sensory data transmission method is provided. The method may be performed by a sensing network element or a chip in a sensing network element. The method includes: A first sensing network element sends first address information of the first sensing network element to a second sensing network element. The first address information is used to establish a first data channel for transmitting sensory data between the first sensing network element and the second sensing network element. The first sensing network element sends a first request message to the second sensing network element. The first request message is used to request the second sensing network element to perform a first sensing operation. The first sensing network element receives first data information that is sent by the second sensing network element through the first data channel. The first data information is generated by the second sensing network element by performing the first sensing operation based on the first request message.

Therefore, in this application, the first data channel for transmitting the sensory data between the first sensing network element and the second sensing network element may be established, and the second sensing network element may send the first data information to the first sensing network element by using a data plane protocol, to improve a transmission rate and reliability of sensory data transmission.

With reference to the first aspect, in some implementations of the first aspect, the method further includes: The first sensing network element receives a second request message from the second sensing network element. The second request message is used to request to establish the first data channel. That a first sensing network element sends first address information of the first sensing network element to a second sensing network element includes: The first sensing network element sends a second response message to the second sensing network element. The second response message includes the first address information of the first sensing network element.

Therefore, in this application, the first sensing network element may initiate establishment of the first data channel, so that the first sensing network element may initiate establishment of the first data channel based on a sensing requirement, to improve flexibility and the reliability of the sensory data transmission.

With reference to the first aspect, in some implementations of the first aspect, that a first sensing network element sends first address information of the first sensing network element to a second sensing network element includes: The first sensing network element sends a third request message to the second sensing network element. The third request message is used to request to establish the first data channel, and the third request message includes the first address information of the first sensing network element.

Therefore, in this application, the second sensing network element may initiate establishment of the first data channel, to improve the reliability of the sensory data transmission.

With reference to the first aspect, in some implementations of the first aspect, that the first sensing network element receives first data information that is sent by the second sensing network element through the first data channel includes: The first sensing network element receives, from a user plane function network element, the first data information that is sent by the second sensing network element to the user plane function network element through a second data channel. The second data channel is associated with the first data channel.

Therefore, in this application, the second sensing network element may send the first data information to the first sensing network element via the user plane function network element, so that a function of the user plane function network element can be reused, to improve the reliability of the sensory data transmission.

With reference to the first aspect, in some implementations of the first aspect, the method further includes: The first sensing network element sends a fourth request message to a session function management network element. The fourth request message is used to request the session function management network element to establish the second data channel.

Optionally, the fourth request message further includes an identifier of a target second sensing network element or a target cell identifier, and is used by the SMF to establish a second data channel with a second sensing network element corresponding to the identifier of the target second sensing network element or the target cell identifier.

Therefore, in this application, the first sensing network element may request to initiate establishment of the second data channel, so that the first sensing network element may initiate establishment of the second data channel based on a sensing requirement, to improve the flexibility and reliability of the sensory data transmission.

With reference to the first aspect, in some implementations of the first aspect, the method further includes: The first sensing network element determines a channel association identifier, where the channel association identifier indicates that the second data channel is associated with the first data channel, the fourth request message includes the channel association identifier, and the second response message or the third request message includes the channel association identifier.

Therefore, in this application, the first sensing network element may allocate a channel association identifier, so that the second sensing network element may associate the first sensing channel with the second sensing channel based on the channel association identifier, to improve the reliability of the sensory data transmission.

With reference to the first aspect, in some implementations of the first aspect, the method further includes: The first sensing network element receives a fourth response message from the session function management network element. The fourth response message includes a channel association identifier, and the second response message or the third request message includes the channel association identifier, where the channel association identifier indicates that the second data channel is associated with the first data channel, and the channel association identifier is determined by the session function management network element or the second sensing network element.

Therefore, in this application, the session function management network element or the second sensing network element may allocate a channel association identifier, so that the second sensing network element may associate the first sensing channel with the second sensing channel based on the channel association identifier, to improve the reliability of the sensory data transmission.

With reference to the first aspect, in some implementations of the first aspect, the fourth request message includes the channel association identifier, where the channel association identifier indicates that the second data channel is associated with the first data channel, the channel association identifier is determined by the second sensing network element, and the second request message includes the channel association identifier. Alternatively, the method further includes: The first sensing network element receives a third response message from the second sensing network element. The third response message includes the channel association identifier.

Therefore, in this application, the second sensing network element may allocate a channel association identifier, so that the second sensing network element may associate the first sensing channel with the second sensing channel based on the channel association identifier, to improve the reliability of the sensory data transmission.

With reference to the first aspect, in some implementations of the first aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

Therefore, in this application, the first request message may carry identification information of the first sensing operation. When performing the first sensing operation to generate the first sensory data, the second sensing network element may send the first sensory data and the identifier of the first sensing operation together to the second sensing network element, so that the second sensing network element may learn, based on the identifier, that the first sensory data belongs to the first sensing operation, to improve the reliability of the sensory data transmission.

With reference to the first aspect, in some implementations of the first aspect, the method further includes: The first sensing network element receives a sensing requirement message. The first sensing network element generates the identification information of the first sensing operation based on the sensing requirement message. That the first sensing network element sends a first request message to the second sensing network element includes: The first sensing network element sends the first request message to the second sensing network element based on the sensing requirement message. The first request message includes the identification information of the first sensing operation.

Therefore, in this application, the first sensing network element may allocate identification information of the first sensing operation to the first sensing operation based on a received sensing requirement message, and carry the identification information when sending the first request message, to improve the reliability of the sensory data transmission.

With reference to the first aspect, in some implementations of the first aspect, the method further includes: The first sensing network element receives an interface establishment request message from the second sensing network element. The interface establishment request message includes first capability information, and the first capability information indicates a sensing capability of the second sensing network element. The first sensing network element sends an interface establishment response message to the second sensing network element. The interface establishment response message includes second capability information, and the second capability information indicates a sensing capability of the first sensing network element.

Therefore, in this application, when an interface between the first sensing network element and the second sensing network element is established, corresponding capability information that indicates a sensing capability may be included in a message, to improve efficiency of the sensory data transmission.

According to a second aspect, a sensory data transmission method is provided. The method may be performed by a sensing network element or a chip in a sensing network element. The method includes: A second sensing network element receives first address information of a first sensing network element from the first sensing network element. The first address information is used to establish a first data channel for transmitting sensory data between the first sensing network element and the second sensing network element. The second sensing network element receives a first request message from the first sensing network element. The first request message is used to request the second sensing network element to perform a first sensing operation. The second sensing network element performs the first sensing operation based on the first request message, to generate first data information. The second sensing network element sends the first data information to the first sensing network element through the first data channel.

Therefore, in this application, the first data channel for transmitting the sensory data between the first sensing network element and the second sensing network element may be established, and the second sensing network element may send the first data information to the first sensing network element by using a data plane protocol, to improve a transmission rate and reliability of sensory data transmission.

With reference to the second aspect, in some implementations of the second aspect, the method further includes: The second sensing network element sends a second request message to the first sensing network element. The second request message is used to request to establish the first data channel. That a second sensing network element receives first address information of a first sensing network element from the first sensing network element includes: The second sensing network element receives a second response message from the first sensing network element. The second response message includes the first address information of the first sensing network element.

With reference to the second aspect, in some implementations of the second aspect, that a second sensing network element receives first address information of a first sensing network element from the first sensing network element includes: The second sensing network element receives a third request message from the first sensing network element. The third request message is used to request to establish the first data channel, and the third request message includes the first address information of the first sensing network element.

With reference to the second aspect, in some implementations of the second aspect, that the second sensing network element sends the first data information to the first sensing network element through the first data channel includes: The second sensing network element sends the first data information to the first sensing network element via a user plane function network element. There is a second data channel for transmitting sensory data between the second sensing network element and the user plane function network element, and the second data channel is associated with the first data channel.

With reference to the second aspect, in some implementations of the second aspect, the method further includes: The second sensing network element receives a fifth request message from a session function management network element. The fifth request message is used to request to establish the second data channel.

With reference to the second aspect, in some implementations of the second aspect, the method further includes: The second sensing network element sends a sixth request message to the session function management network element. The sixth request message is used to request to establish the second data channel.

With reference to the second aspect, in some implementations of the second aspect, before the second sensing network element receives the fifth request message from the session function management network element, the method further includes: The second sensing network element sends a seventh request message to the session function management network element. The seventh request message is used to request the session function management network element to establish the second data channel.

With reference to the second aspect, in some implementations of the second aspect, the fifth request message, the sixth request message, or the seventh request message includes sensing indication information, and the sensing indication information indicates that the second data channel is used to transmit the sensory data.

With reference to the second aspect, in some implementations of the second aspect, the fifth request message includes a channel association identifier, and the third request message or the second response message includes the channel association identifier, where the channel association identifier indicates that the second data channel is associated with the first data channel, and the channel association identifier is determined by the first sensing network element.

With reference to the second aspect, in some implementations of the second aspect, the fifth request message includes a channel association identifier, and the third request message or the second response message includes the channel association identifier, where the channel association identifier indicates that the second data channel is associated with the first data channel, and the channel association identifier is determined by the session function management network element.

With reference to the second aspect, in some implementations of the second aspect, the second sensing network element determines a channel association identifier, where the channel association identifier indicates that the second data channel is associated with the first data channel, and the second request message and the fifth request message include the channel association identifier. Alternatively, the second sensing network element determines a channel association identifier, where the channel association identifier indicates that the second data channel is associated with the first data channel, and the fifth request message includes the channel association identifier. The second sensing network element sends a third response message to the first sensing network element, and the third response message includes the channel association identifier. Alternatively, the second sensing network element determines a channel association identifier, where the channel association identifier indicates that the second data channel is associated with the first data channel, a fifth response message includes the channel association identifier, and the second response message or the third request message includes the channel association identifier.

With reference to the second aspect, in some implementations of the second aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

With reference to the second aspect, in some implementations of the second aspect, the method further includes: The second sensing network element sends an interface establishment request message to the first sensing network element. The interface establishment request message includes first capability information, and the first capability information indicates a sensing capability of the second sensing network element. The second sensing network element receives an interface establishment response message from the first sensing network element. The interface establishment response message includes second capability information, and the second capability information indicates a sensing capability of the first sensing network element.

According to a third aspect, a sensory data transmission method is provided. The method may be performed by a session function management network element or a chip in a session function management network element. The method includes: The session function management network element sends a fifth request message to a second sensing network element. The fifth request message is used to request to establish a second data channel for transmitting sensory data between the session function management network element and the second sensing network element, and the second data channel is associated with a first data channel. The first data channel is used by the second sensing network element to send first data information to a first sensing network element, and the first data information is generated by the second sensing network element by performing a first sensing operation.

Therefore, in this application, the second sensing network element may send the first data information to the first sensing network element via a user plane function network element, so that a function of the user plane function network element can be reused, to improve reliability of sensory data transmission.

With reference to the third aspect, in some implementations of the third aspect, before the session function management network element sends the fifth request message to the second sensing network element, the method further includes: The session function management network element receives a fourth request message from the first sensing network element. The fourth request message is used to request the session function management network element to establish the second data channel.

With reference to the third aspect, in some implementations of the third aspect, before the session function management network element sends the fifth request message to the second sensing network element, the method further includes: The session function management network element receives a seventh request message from the second sensing network element. The seventh request message is used to request the session function management network element to establish the second data channel.

With reference to the third aspect, in some implementations of the third aspect, the fourth request message and the fifth request message include a channel association identifier, where the channel association identifier indicates that the second data channel is associated with the first data channel, and the channel association identifier is determined by the first sensing network element or the second sensing network element.

With reference to the third aspect, in some implementations of the third aspect, the method further includes: The session function management network element determines a channel association identifier, where the channel association identifier indicates that the second data channel is associated with the first data channel. The session function management network element sends a fourth response message to the first sensing network element. The fourth response message includes the data channel association identifier, and the fifth request message includes the channel association identifier.

With reference to the third aspect, in some implementations of the third aspect, the method further includes: The session function management network element receives a fifth response message from the second sensing network element. The fifth response message includes the channel association identifier, where the channel association identifier is determined by the second sensing network element, and the channel association identifier indicates that the second data channel is associated with the first data channel. The session function management network element sends a fourth response message to the first sensing network element. The fourth response message includes the channel association identifier.

With reference to the third aspect, in some implementations of the third aspect, the fifth request message or the seventh request message includes sensing indication information, and the sensing indication information indicates that the second data channel is used to transmit the sensory data.

According to a fourth aspect, a sensory data transmission method is provided. The method may be performed by a session function management network element or a chip in a session function management network element. The method includes: The session function management network element receives a sixth request message from a second sensing network element. The sixth request message is used to request to establish a second data channel for transmitting sensory data between the session function management network element and the second sensing network element, and the second data channel is associated with a first data channel. The first data channel is used by the second sensing network element to send first data information to a first sensing network element, and the first data information is generated by the second sensing network element by performing a first sensing operation.

Therefore, in this application, the second sensing network element may send the first data information to the first sensing network element via a user plane function network element, so that a function of the user plane function network element can be reused, to improve reliability of sensory data transmission.

With reference to the fourth aspect, in some implementations of the fourth aspect, the sixth request message includes sensing indication information, and the sensing indication information indicates that the second data channel is used to transmit the sensory data.

According to a fifth aspect, a sensory data transmission method is provided. The method may be performed by a sensing network element or a chip in a sensing network element. The method includes: A first sensing network element sends a first request message to a second sensing network element. The first request message is used to request the second sensing network element to perform a first sensing operation. The first sensing network element receives a first response message from the second sensing network element. The first response message includes first data information, and the first data information is generated by the second sensing network element by performing the first sensing operation based on the first request message.

Therefore, in this application, the second sensing network element may transmit the first data information by using a control plane protocol, and a control plane and a data plane use a same protocol. This can improve efficiency and reliability of sensory data transmission.

With reference to the fifth aspect, in some implementations of the fifth aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

Therefore, in this application, the first request message may carry identification information of the first sensing operation. When performing the first sensing operation to generate the first sensory data, the second sensing network element may send the first sensory data and the identifier of the first sensing operation together to the second sensing network element, so that the second sensing network element may learn, based on the identifier, that the first sensory data belongs to the first sensing operation, to improve the reliability of the sensory data transmission.

With reference to the fifth aspect, in some implementations of the fifth aspect, the method further includes: The first sensing network element receives a sensing requirement message. The first sensing network element generates the identification information of the first sensing operation based on the sensing requirement message. That a first sensing network element sends a first request message to a second sensing network element includes: The first sensing network element sends the first request message to the second sensing network element based on the sensing requirement message. The first request message includes the identification information of the first sensing operation.

Therefore, in this application, the first sensing network element may allocate identification information of the first sensing operation to the first sensing operation based on a received sensing requirement message, and carry the identification information when sending the first request message, to improve the reliability of the sensory data transmission.

With reference to the fifth aspect, in some implementations of the fifth aspect, the method further includes: The first sensing network element receives an interface establishment request message from the second sensing network element. The interface establishment request message includes first capability information, and the first capability information indicates a sensing capability of the second sensing network element. The first sensing network element sends an interface establishment response message to the second sensing network element. The interface establishment response message includes second capability information, and the second capability information indicates a sensing capability of the first sensing network element.

Therefore, in this application, when an interface between the first sensing network element and the second sensing network element is established, corresponding capability information that indicates a sensing capability may be included in a message, to improve efficiency of the sensory data transmission.

According to a sixth aspect, a sensory data transmission method is provided. The method may be performed by a sensing network element or a chip in a sensing network element. The method includes: A second sensing network element receives a first request message from a first sensing network element. The first request message is used to request the second sensing network element to perform a first sensing operation. The second sensing network element performs the first sensing operation based on the first request message, to generate first data information. The second sensing network element sends a first response message to the first sensing network element. The first response message includes the first data information.

Therefore, in this application, the second sensing network element may transmit the first data information by using a control plane protocol, and a control plane and a data plane use a same protocol. This can improve efficiency and reliability of sensory data transmission.

With reference to the sixth aspect, in some implementations of the sixth aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

With reference to the sixth aspect, in some implementations of the sixth aspect, the method further includes: The second sensing network element sends an interface establishment request message to the first sensing network element. The interface establishment request message includes first capability information, and the first capability information indicates a sensing capability of the second sensing network element. The second sensing network element receives an interface establishment response message from the first sensing network element. The interface establishment response message includes second capability information, and the second capability information indicates a sensing capability of the first sensing network element.

According to a seventh aspect, a sensing network element is provided. The sensing network element includes a sending unit and a receiving unit. The sending unit is configured to send first address information of the sensing network element to a second sensing network element. The first address information is used to establish a data channel for transmitting sensory data between the sensing network element and the second sensing network element. The sending unit is further configured to send a first request message to the second sensing network element. The first request message is used to request the second sensing network element to perform a first sensing operation. The receiving unit is configured to receive first data information that is sent by the second sensing network element through the data channel. The first data information is generated by the second sensing network element by performing the first sensing operation based on the first request message.

Therefore, in this application, a first data channel for transmitting the sensory data between the first sensing network element and the second sensing network element may be established, and the second sensing network element may send the first data information to the first sensing network element by using a data plane protocol, to improve a transmission rate and reliability of sensory data transmission.

With reference to the seventh aspect, in some implementations of the seventh aspect, the receiving unit is further configured to receive a second request message from the second sensing network element. The second request message is used to request to establish the first data channel. The sending unit is specifically configured to send a second response message to the second sensing network element. The second response message includes first address information of the first sensing network element.

With reference to the seventh aspect, in some implementations of the seventh aspect, the sending unit is specifically configured to send a third request message to the second sensing network element. The third request message is used to request to establish the first data channel, and the third request message includes the first address information of the first sensing network element.

With reference to the seventh aspect, in some implementations of the seventh aspect, the receiving unit is specifically configured to receive the first data information that is sent by the second sensing network element to a user plane function network element through a second data channel. The second data channel is associated with the first data channel.

With reference to the seventh aspect, in some implementations of the seventh aspect, the sending unit is further configured to send a fourth request message to a session function management network element. The fourth request message is used to request the session function management network element to establish the second data channel.

With reference to the seventh aspect, in some implementations of the seventh aspect, the sensing network element further includes a processing unit. The processing unit is configured to determine a channel association identifier, where the channel association identifier indicates that the second data channel is associated with the first data channel, the fourth request message includes the channel association identifier, and the second response message or the third request message includes the channel association identifier.

With reference to the seventh aspect, in some implementations of the seventh aspect, the receiving unit is further configured to receive a fourth response message from the session function management network element. The fourth response message includes a channel association identifier, and the second response message or the third request message includes the channel association identifier, where the channel association identifier indicates that the second data channel is associated with the first data channel, and the channel association identifier is determined by the session function management network element or the second sensing network element.

With reference to the seventh aspect, in some implementations of the seventh aspect, the receiving unit is further configured to receive a third response message from the second sensing network element. The third response message includes the channel association identifier.

With reference to the seventh aspect, in some implementations of the seventh aspect, the second request message or the third response message includes a channel association identifier, and the fourth request message includes the channel association identifier, where the channel association identifier indicates that the second data channel is associated with the first data channel, and the channel association identifier is determined by the second sensing network element.

With reference to the seventh aspect, in some implementations of the seventh aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

With reference to the seventh aspect, in some implementations of the seventh aspect, the receiving unit is further configured to receive a sensing requirement message. The processing unit is further configured to generate the identification information of the first sensing operation based on the sensing requirement message. The sending unit is specifically configured to send the first request message to the second sensing network element based on the sensing requirement message. The first request message includes the identification information of the first sensing operation.

With reference to the seventh aspect, in some implementations of the seventh aspect, the receiving unit is further configured to receive an interface establishment request message from the second sensing network element. The interface establishment request message includes first capability information, and the first capability information indicates a sensing capability of the second sensing network element. The sending unit is further configured to send an interface establishment response message to the second sensing network element. The interface establishment response message includes second capability information, and the second capability information indicates a sensing capability of the first sensing network element.

According to an eighth aspect, a sensing network element is provided. The sensing network element includes a sending unit, a receiving unit, and a processing unit. The receiving unit is configured to receive first address information of a first sensing network element from the first sensing network element. The first address information is used to establish a first data channel for transmitting sensory data between the first sensing network element and a second sensing network element. The receiving unit is further configured to receive a first request message from the first sensing network element. The first request message is used to request the second sensing network element to perform a first sensing operation. The processing unit is configured to perform the first sensing operation based on the first request message, to generate first data information. The sending unit is configured to send the first data information to the first sensing network element through the first data channel.

Therefore, in this application, the first data channel for transmitting the sensory data between the first sensing network element and the second sensing network element may be established, and the second sensing network element may send the first data information to the first sensing network element by using a data plane protocol, to improve a transmission rate and reliability of sensory data transmission.

With reference to the eighth aspect, in some implementations of the eighth aspect, the sending unit is further configured to send a second request message to the first sensing network element. The second request message is used to request to establish the first data channel. The receiving unit is specifically configured to receive a second response message from the first sensing network element. The second response message includes the first address information of the first sensing network element.

With reference to the eighth aspect, in some implementations of the eighth aspect, the receiving unit is specifically configured to receive a third request message from the first sensing network element. The third request message is used to request to establish the first data channel, and the third request message includes the first address information of the first sensing network element.

With reference to the eighth aspect, in some implementations of the eighth aspect, the sending unit is specifically configured to send the first data information to the first sensing network element via a user plane function network element. There is a second data channel for transmitting sensory data between the second sensing network element and the user plane function network element, and the second data channel is associated with the first data channel.

With reference to the eighth aspect, in some implementations of the eighth aspect, the receiving unit is further configured to receive a fifth request message from a session function management network element. The fifth request message is used to request to establish the second data channel.

With reference to the eighth aspect, in some implementations of the eighth aspect, the sending unit is further configured to send a sixth request message to the session function management network element. The sixth request message is used to request to establish the second data channel.

With reference to the eighth aspect, in some implementations of the eighth aspect, before the second sensing network element receives the fifth request message from the session function management network element, the sending unit is further configured to send a seventh request message to the session function management network element. The seventh request message is used to request the session function management network element to establish the second data channel.

With reference to the eighth aspect, in some implementations of the eighth aspect, the fifth request message, the sixth request message, or the seventh request message includes sensing indication information, and the sensing indication information indicates that the second data channel is used to transmit the sensory data.

With reference to the eighth aspect, in some implementations of the eighth aspect, the fifth request message includes a channel association identifier, and the third request message or the second response message includes the channel association identifier, where the channel association identifier indicates that the second data channel is associated with the first data channel, and the channel association identifier is determined by the first sensing network element.

With reference to the eighth aspect, in some implementations of the eighth aspect, the fifth request message includes a channel association identifier, and the third request message or the second response message includes the channel association identifier, where the channel association identifier indicates that the second data channel is associated with the first data channel, and the channel association identifier is determined by the session function management network element.

With reference to the eighth aspect, in some implementations of the eighth aspect, the sending unit is further configured to send a third response message to the first sensing network element. The third response message includes a channel association identifier.

With reference to the eighth aspect, in some implementations of the eighth aspect, the processing unit is further configured to determine a channel association identifier, where the channel association identifier indicates that the second data channel is associated with the first data channel, the second request message or the third response message includes the channel association identifier, and the fifth request message includes the channel association identifier. Alternatively, the processing unit is further configured to determine a channel association identifier, where the channel association identifier indicates that the second data channel is associated with the first data channel, the fifth response message includes the channel association identifier, and the second response message or the third request message includes the channel association identifier.

With reference to the eighth aspect, in some implementations of the eighth aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

With reference to the eighth aspect, in some implementations of the eighth aspect, the sending unit is further configured to send an interface establishment request message to the first sensing network element. The interface establishment request message includes first capability information, and the first capability information indicates a sensing capability of the second sensing network element. The receiving unit is further configured to receive an interface establishment response message from the first sensing network element. The interface establishment response message includes second capability information, and the second capability information indicates a sensing capability of the first sensing network element.

According to a ninth aspect, a session function management network element is provided. The session function management network element includes a sending unit, and the sending unit is configured to send a fifth request message to a second sensing network element. The fifth request message is used to request to establish a second data channel for transmitting sensory data between the session function management network element and the second sensing network element, and the second data channel is associated with a first data channel. The first data channel is used by the second sensing network element to send first data information to a first sensing network element, and the first data information is generated by the second sensing network element by performing a first sensing operation.

Therefore, in this application, the second sensing network element may send the first data information to the first sensing network element via a user plane function network element, so that a function of the user plane function network element can be reused, to improve reliability of sensory data transmission.

With reference to the ninth aspect, in some implementations of the ninth aspect, the session function management network element further includes a receiving unit. Before the session function management network element sends the fifth request message to the second sensing network element, the receiving unit is configured to receive a fourth request message from the first sensing network element. The fourth request message is used to request the session function management network element to establish the second data channel.

With reference to the ninth aspect, in some implementations of the ninth aspect, before the session function management network element sends the fifth request message to the second sensing network element, the receiving unit is further configured to receive a seventh request message from the second sensing network element. The seventh request message is used to request the session function management network element to establish the second data channel.

With reference to the ninth aspect, in some implementations of the ninth aspect, the fourth request message and the fifth request message include a channel association identifier, where the channel association identifier indicates that the second data channel is associated with the first data channel, and the channel association identifier is determined by the first sensing network element or the second sensing network element.

With reference to the ninth aspect, in some implementations of the ninth aspect, the session function management network element further includes a processing unit. The processing unit is configured to determine a channel association identifier, where the channel association identifier indicates that the second data channel is associated with the first data channel. The sending unit is configured to send a fourth response message. The fourth response message includes the data channel association identifier, and the fifth request message includes the channel association identifier.

With reference to the ninth aspect, in some implementations of the ninth aspect, the receiving unit is further configured to receive a fifth response message from the second sensing network element. The fifth response message includes the channel association identifier, where the channel association identifier is determined by the second sensing network element, and the channel association identifier indicates that the second data channel is associated with the first data channel. The sending unit is further configured to send a fourth response message to the first sensing network element. The fourth response message includes the channel association identifier.

With reference to the ninth aspect, in some implementations of the ninth aspect, the fifth request message or the seventh request message includes sensing indication information, and the sensing indication information indicates that the second data channel is used to transmit the sensory data.

According to a tenth aspect, a session function management network element is provided. The session function management network element includes a receiving unit, and the receiving unit is configured to receive a sixth request message from a second sensing network element. The sixth request message is used to request to establish a second data channel for transmitting sensory data between the session function management network element and the second sensing network element, and the second data channel is associated with a first data channel. The first data channel is used by the second sensing network element to send first data information to a first sensing network element, and the first data information is generated by the second sensing network element by performing a first sensing operation.

Therefore, in this application, the second sensing network element may send the first data information to the first sensing network element via a user plane function network element, so that a function of the user plane function network element can be reused, to improve reliability of sensory data transmission.

With reference to the tenth aspect, in some implementations of the tenth aspect, the sixth request message includes sensing indication information, and the sensing indication information indicates that the second data channel is used to transmit the sensory data.

According to an eleventh aspect, a sensing network element is provided. The sensing network element includes a sending unit and a receiving unit. The sending unit is configured to send a first request message to a second sensing network element. The first request message is used to request the second sensing network element to perform a first sensing operation. The receiving unit is configured to receive a first response message from the second sensing network element. The first response message includes first data information, and the first data information is generated by the second sensing network element by performing the first sensing operation based on the first request message.

Therefore, in this application, the second sensing network element may transmit the first data information by using a control plane protocol, and a control plane and a data plane use a same protocol. This can improve efficiency and reliability of sensory data transmission.

With reference to the eleventh aspect, in some implementations of the eleventh aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

With reference to the eleventh aspect, in some implementations of the eleventh aspect, the sensing network element further includes a processing unit. The receiving unit is further configured to receive a sensing requirement message. The processing unit is configured to generate the identification information of the first sensing operation based on the sensing requirement message. The sending unit is specifically configured to send an interface establishment response message to the second sensing network element. The interface establishment response message includes second capability information, and the second capability information indicates a sensing capability of the first sensing network element.

According to a twelfth aspect, a sensing network element is provided. The sensing network element includes a sending unit, a receiving unit, and a processing unit. The receiving unit is configured to receive a first request message from a first sensing network element. The first request message is used to request a second sensing network element to perform a first sensing operation. The processing unit is configured to perform the first sensing operation based on the first request message, to generate first data information. The sending unit is configured to send a first response message to the first sensing network element. The first response message includes the first data information.

Therefore, in this application, the second sensing network element may transmit the first data information by using a control plane protocol, and a control plane and a data plane use a same protocol. This can improve efficiency and reliability of sensory data transmission.

With reference to the twelfth aspect, in some implementations of the twelfth aspect, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

With reference to the twelfth aspect, in some implementations of the twelfth aspect, the sending unit is further configured to send an interface establishment request message to the first sensing network element. The interface establishment request message includes first capability information, and the first capability information indicates a sensing capability of the second sensing network element. The receiving unit is further configured to receive an interface establishment response message from the first sensing network element. The interface establishment response message includes second capability information, and the second capability information indicates a sensing capability of the first sensing network element.

According to a thirteenth aspect, a communication apparatus is provided. The apparatus may include a processing unit, a sending unit, and a receiving unit. Optionally, the sending unit and the receiving unit may alternatively be a transceiver unit.

When the apparatus is a first sensing network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the first sensing network element to perform any method in the first aspect to the fourth aspect or the fifth aspect and the sixth aspect. When the apparatus is a chip in the first sensing network element, the processing unit may be a processor, and the sending unit and the receiving unit may be an input/output interface, a pin, a circuit, or the like. The processing unit executes the instructions stored in the storage unit, to enable the chip to perform the method in the first aspect to the fourth aspect or the fifth aspect and the sixth aspect. The storage unit is configured to store the instructions. The storage unit may be a storage unit (for example, a register or a cache) in the chip, or may be a storage unit (for example, a read-only memory or a random access memory) that is in the first sensing network element and that is located outside the chip.

When the apparatus is a second sensing network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the second sensing network element to perform any method in the first aspect to the fourth aspect or the fifth aspect and the sixth aspect. When the apparatus is a chip in the second sensing network element, the processing unit may be a processor, and the sending unit and the receiving unit may be an input/output interface, a pin, a circuit, or the like. The processing unit executes the instructions stored in the storage unit, to enable the chip to perform the method in the first aspect to the fourth aspect or the fifth aspect and the sixth aspect. The storage unit is configured to store the instructions. The storage unit may be a storage unit (for example, a register or a cache) in the chip, or may be a storage unit (for example, a read-only memory or a random access memory) that is in the second sensing network element and that is located outside the chip.

When the apparatus is a session function management network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the session function management network element to perform any method in the first aspect to the fourth aspect. When the apparatus is a chip in the session function management network element, the processing unit may be a processor, and the sending unit and the receiving unit may be an input/output interface, a pin, a circuit, or the like. The processing unit executes the instructions stored in the storage unit, to enable the chip to perform the method in the first aspect to the fourth aspect. The storage unit is configured to store the instructions. The storage unit may be a storage unit (for example, a register or a cache) in the chip, or may be a storage unit (for example, a read-only memory or a random access memory) that is in the session function management network element and that is located outside the chip.

According to a fourteenth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement any method in the first aspect to the fourth aspect or the fifth aspect and the sixth aspect by using a logic circuit or by executing code instructions.

According to a fifteenth aspect, a computer-readable storage medium is provided. The computer-readable storage medium stores a computer program or instructions. When the computer program or the instructions are executed, any method in the first aspect to the fourth aspect or the fifth aspect and the sixth aspect is implemented.

According to a sixteenth aspect, a computer program product including instructions is provided. When the instructions are run, any method in the first aspect to the fourth aspect or the fifth aspect and the sixth aspect is implemented.

According to a seventeenth aspect, a computer program is provided. The computer program includes code or instructions. When the code or the instructions are run, the method in any possible implementation of the first aspect to the fourth aspect or the fifth aspect and the sixth aspect is implemented.

According to an eighteenth aspect, a chip system is provided. The chip system includes a processor, may further include a memory, and is configured to implement at least one method described in the first aspect to the fourth aspect or the fifth aspect and the sixth aspect. The chip system may include a chip, or may include a chip and another discrete component.

According to a nineteenth aspect, a communication system is provided. The system includes the apparatus (for example, a first sensing network element, a second sensing network element, and a session function management network element, or a first sensing network element and a second sensing network element) in any one of the seventh aspect to the tenth aspect or the eleventh aspect and the twelfth aspect.

In some implementations, the second sensing network element may be an access network device.

### BRIEF DESCRIPTION OF DRAWINGS

FIG. 1 is a schematic diagram of a system to which sensory data transmission is applicable according to an embodiment of this application;
FIG. 2 is a schematic diagram of another system to which sensory data transmission is applicable according to an embodiment of this application;
FIG. 3 is a schematic flowchart of sensory data transmission according to an embodiment of this application;
FIG. 4 is another schematic flowchart of sensory data transmission according to an embodiment of this application;
FIG. 5 is a schematic flowchart of transmitting sensory data without using a UPF according to an embodiment of this application;
FIG. 6 to FIG. 11 each are a schematic flowchart of transmitting sensory data via a UPF according to an embodiment of this application;
FIG. 12 is a schematic flowchart of transmitting sensory data on a control plane according to an embodiment of this application;
FIG. 13 is a schematic diagram of a protocol for transmitting sensory data without using a UPF according to an embodiment of this application;
FIG. 14 is a schematic diagram of a protocol for transmitting sensory data via a UPF according to an embodiment of this application;
FIG. 15 is a schematic diagram of a protocol for transmitting sensory data on a control plane according to an embodiment of this application; and
FIG. 16 and FIG. 17 each are a schematic diagram of a possible structure of a communication apparatus according to an embodiment of this application.

### DESCRIPTION OF EMBODIMENTS

The following describes technical solutions of this application with reference to accompanying drawings.

Terminologies such as "component", "module", and "system" used in this application indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both an application running on a computing device and the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A method in embodiments of this application is applicable to a long term evolution (long term evolution, LTE) system, a long term evolution-advanced technology (long term evolution-advanced, LTE-A) system, an enhanced long term evolution-advanced (enhanced long term evolution-advanced, eLTE) technology system, a 5th generation (5th generation, 5G) mobile communication system, and a new radio (new radio, NR) system, the method may also be extended to similar radio communication systems, for example, wireless fidelity (wireless fidelity, Wi-Fi), worldwide interoperability for microwave access (worldwide interoperability for microwave access, WiMAX), and a cellular system related to the 3rd generation partnership project (3rd generation partnership project, 3GPP).

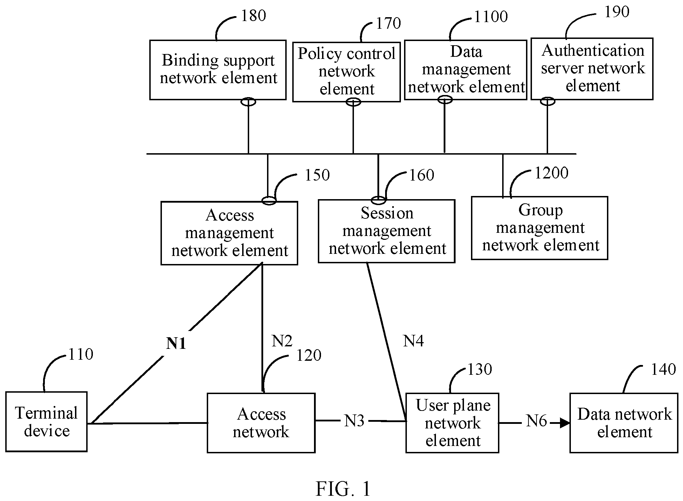

With the upgrade of mobile communication technologies, a 5G network is to be constructed in a flexible and efficient manner. A communication sensing capability may be used as a new capability in the 5G network. For example, a system architecture of a 5G network may be shown in FIG. 1.

FIG. 1 shows a network architecture used in an embodiment of this application. Network elements that may be used in the network architecture are separately described.
1. A terminal device 110 may include various handheld devices, vehicle-mounted devices, wearable devices, computing devices that have a wireless communication function, or other processing devices connected to a wireless modem, and various forms of terminals, for example, a mobile station (mobile station, MS), a terminal (terminal), user equipment (user equipment, UE), and a soft client, for example, water meters, electricity meters, and sensors.
2. A radio access network (radio access network, RAN) network element 120 is configured to provide a network access function for an authorized terminal device in a specific area, and can use transmission tunnels with different quality based on levels, service requirements, and the like of the terminal device.

ARAN network element can manage radio resources and provide an access service for a terminal device, to complete forwarding of a control signal and terminal device data between the terminal device and a core network. The RAN network element may alternatively be understood as a base station in a conventional network.

In this application, when a base station performs wireless communication by using a millimeter-wave band, the base station naturally has a sensing capability similar to that of a radar. In other words, the base station has both a wireless communication capability and a sensing recognition capability. Therefore, in this application, the RAN network element may alternatively be used as a sensing network element that provides a sensing service, and the sensing network element may execute the sensing service, or may detect and/or collect sensory data.

It should be noted that the foregoing "network element" may alternatively be referred to as an entity, a device, an apparatus, a module, or the like. This is not particularly limited in this application. In addition, in this application, for ease of understanding and description, the description of the "network element" is omitted in some descriptions. For example, the RAN network element is referred to as a RAN for short. In this case, the "RAN network element" should be understood as a RAN network element or a RAN entity. Descriptions of a same or similar situation are omitted below.

3. A user plane network element 130 is used for packet routing and forwarding, processing of quality of service (quality of service, QoS) of user plane data, and the like.

In a 5G communication system, the user plane network element may be a user plane function (user plane function, UPF) network element. In a future communication system, the user plane network element may still be the UPF network element, or may have another name. This is not limited in this application.

The UPF mainly provides service processing functions of a user plane, including routing a service, forwarding a packet, anchoring, mapping and executing quality of service (quality of service, QoS), identifying an uplink identifier and routing the identifier to a data network, buffering a downlink packet, triggering a notification of downlink data arrival, and connecting to an external data network.

4. A data network element 140 is configured to provide a network for data transmission.

In a 5G communication system, the data network element may be a data network (data network, DN) network element. In a future communication system, the data network element may still be the DN network element, or may have another name. This is not limited in this application.

5. An access management network element 150 is mainly used for mobility management, access management, and the like, and may be configured to implement functions, for example, lawful interception and access authorization/authentication, other than session management in functions of a mobility management entity (mobility management entity, MME).

In a 5G communication system, the access management network element may be an access and mobility management function (access and mobility management function, AMF) network element. In a future communication system, the access management network element may still be an AMF network element, or may have another name, which is not limited in this application.

6. A session management network element 160 is mainly used for session management, internet protocol (internet protocol, IP) address assignment and management of terminal devices, selection of termination points of manageable user plane functions, policy control and charging function interfaces, downlink data notification, and the like.

In a 5G communication system, the session management network element may be a session management function (session management function, SMF) network element. In a future communication system, the session management network element may still be the SMF network element, or may have another name. This is not limited in this application.

7. A policy control network element 170 is configured to: guide a unified policy framework of network behavior, and provide policy rule information for a control plane function network element (for example, the AMF or SMF network element), and the like.

In a 5G communication system, the policy control network element may be a policy control function (policy control function, PCF) network element. In a future communication system, the policy control network element may still be the PCF network element, or may have another name. This is not limited in this application.

8. A binding support network element 180 is configured to search for a PCF associated with a session.

In a 5G communication system, the binding support network element may be a binding support function (binding support function, BSF) network element. In a future communication system, the binding support network element may still be the BSF network element, or may have another name. This is not limited in this application.

9. An authentication server 190 is configured to authenticate a service, generate a key to implement two-way authentication for a terminal device, and support a unified authentication framework.

In a 5G communication system, the authentication server may be an authentication server function (authentication server function, AUSF) network element. In a future communication system, the authentication server function network element may still be the AUSF network element, or may have another name. This is not limited in this application.

10. Data management network element 1100 is used for terminal device identification, access authentication, registration, mobility management, and the like.

In a 5G communication system, the data management network element may be a unified data management (unified data management, UDM) network element. In a future communication system, the unified data management may still be the UDM network element, or may have another name. This is not limited in this application.

11. An application network element is configured to: perform application-affected data routing, access a network exposure function network element, interact with a policy framework to perform policy control, and the like.

In a 5G communication system, the application network element may be an application function (application function, AF) network element. In a future communication system, the application network element may still be the AF network element, or may have another name. This is not limited in this application.

12. A network storage network element is configured to maintain real-time information of all network function services in a network.

In a 5G communication system, the network storage network element may be a network registration function (network repository function, NRF) network element. In a future communication system, the network repository network element may still be the NRF network element, or may have another name. This is not limited in this application.

13. A group management network element is configured to be responsible for creation and member management of a mobile network local area network (local area network LAN), for example, a 5G LAN group (specifically, a terminal device group).

In a 5G communication system, the group management network element may alternatively be a group management function (management function, GMF) network element.

It should be noted that the foregoing "network element" may alternatively be referred to as an entity, a device, an apparatus, a module, or the like. This is not particularly limited in this application. In addition, in this application, for ease of understanding and description, the description of the "network element" is omitted in some descriptions. For example, a GMF network element is referred to as a GMF for short. In this case, the "GMF" should be understood as a GMF network element or a GMF entity. Descriptions of a same or similar situation are omitted below.

In this application, the network architecture may further include a sensing network element, and the sensing network element is responsible for enabling a sensing service in an end-to-end manner. For example, the sensing network element obtains a sensing requirement based on an internal requirement of a network or a requirement of a demand side for the sensing service. After obtaining a sensing requirement, the sensing network element controls the RAN network element to detect and/or collect sensory data.

It should be noted that, in a 5G network, the sensing network element may be one of network elements in a 5G core network (5G core, 5GC). Alternatively, the sensing network element may be a non-core network element. This is not particularly limited in this application.

It should be understood that the foregoing network architecture applied to this embodiment of this application is merely an example of a network architecture described from a perspective of a service architecture, and a network architecture to which embodiments of this application are applicable is not limited thereto. Embodiments of this application are applicable to any network architecture that can implement functions of the foregoing network elements.

For example, in some network architectures, network function entities such as an AMF, an SMF, a PCF, a GMF, and a UDM are all referred to as network function (Network Function, NF) network elements. Alternatively, in some other network architectures, a set of network elements such as an AMF, an SMF, a PC, a GMF, and a UDM may be referred to as a control plane function (Control Plane Function, CPF) network element.

In the network architecture, an N2 interface is a reference point between the RAN 120 network element and the AMF 160 network element, and is configured to send a non-access stratum (non-access stratum, NAS) message or the like. An N3 interface is a reference point between the RAN 120 network element and the UPF 130 network element, and is configured to transmit user plane data or the like. An N4 interface is a reference point between the SMF 170 network element and the UPF 130 network element, and is configured to transmit information such as tunnel identification information of an N3 connection, data buffering indication information, and a downlink data notification message. An N6 interface is a reference point between the UPF network element 130 and the DN network element 140, and is configured to transmit user plane data or the like. An N23 interface is a reference point between an NWDA network element 1140 and a PCF network element 1110. If an AF network element 130 is an AF network element in a network, the AF network element 130 interacts with another network element via the PCF network element 1110 or an NEF network element 180.

In this application, the proposed sensing network element may communicate with another network element. For example, the sensing network element may communicate with network elements such as the RAN network element, the AMF network element, and the SMF network element.

The following uses network elements in the 5G system as an example to describe specific solution details. It may be understood that, when the solution is used in an LTE system or a future communication system, each network element in the solution may be replaced with another network element having a corresponding function. This is not limited in this application.

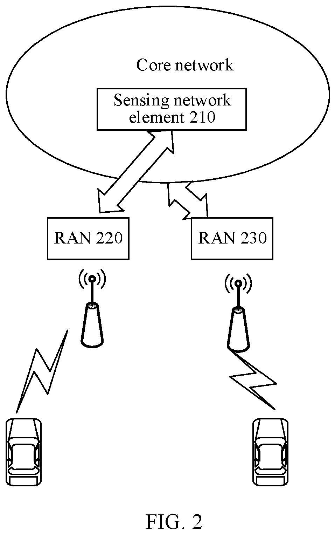

FIG. 2 shows a network architecture to which embodiments of this application are applicable. The network architecture 200 includes a sensing network element and at least one RAN network element having a sensing capability, for example, a sensing network element 210, a RAN 220, and a RAN 230 shown in FIG. 2.

The sensing network element 210 is responsible for enabling a sensing service in an end-to-end manner. For example, the sensing network element 210 obtains a sensing requirement based on an internal requirement (for example, an AMF, an NEF, or a gateway sensing center (GSC, gateway sensing center), for example, the gateway sensing center is configured to receive a sensing request from a sensing demand side (for example, a sensing client), and send the sensing request to a sensing network element SF) of a network or a requirement of another service perception demand side (for example, an AF, an external application server (application server, AS), or a terminal device). After obtaining the sensing requirement, the sensing network element 210 controls the RAN 220 and/or the RAN 230 to detect and/or collect sensory data. After obtaining the sensory data through detection, the RAN 220 and/or the RAN 230 provide/provides the sensory data to the sensing network element 210, and the sensing network element 210 provides the sensing service based on the sensory data. For example, the sensing network element 210 provides the sensing service to a demand side, for example, an AF, an external application server (application server, AS), or a terminal device. Alternatively, the sensing network element 210 performs optimization and the like inside the network based on the sensory data.

It should be understood that FIG. 1 and FIG. 2 are merely examples of network architectures, and the network architecture to which embodiments of this application are applicable is not limited thereto. Embodiments of this application are applicable to any network architecture that can implement functions of the foregoing network elements.

The following describes some examples of application scenarios of sensing requirements in the communication field.

### (1) Automatic driving

### Scenario 1 (V2X and UAV):

V2X indicates vehicle-to-everything (vehicle-to-everything), and UAV indicates an unmanned aerial vehicle (unmanned aerial vehicle).

Because a sensing distance of a vehicle or an unmanned aerial vehicle is short or a non-line-of-sight (non-line-of-sight, NLOS) path cannot be sensed, a dynamic map may be generated through sensing.

### Scenario 2 (V2X and UAV):

In a driving process of a vehicle or an unmanned aerial vehicle, if dangerous events, such as sudden appearance of a person or an object, caused by blind spots occur, the dangerous events can be recognized through sensing, and UE is notified to perform an emergency operation.

### Scenario 3 (V2X and UAV):

For automatic driving assistance of a vehicle or an unmanned aerial vehicle, a customized high-precision dynamic map is generated through sensing, to assist UE in automatic driving.

### (2) Security supervision

### Scenario 1 (V2X and UAV):

In the case of a driving offence, for example, if a vehicle occupies an emergency lane or an unmanned aerial vehicle deviates from a route, the vehicle offence can be recognized through sensing, and a real-time alarm can be given or a penalty can be executed afterwards.

Scenario 2 (national railway perimeter and UAV): If a foreign object intrudes into a railway track or an unmanned aerial vehicle intrudes into a no-fly zone (such as an airport), the violation object can be recognized and tracked through sensing, and real-time emergency handling can be performed.

### (3) Family health:

Scenario 1: For detection of abnormal postures, such as people falling down, the abnormal postures can be recognized through sensing and an alarm can be given.

Scenario 2: For health detection, such as human respiration and heartbeat detection, an abnormal indicator can be recognized through sensing, and an alarm can be given.

(4) Meteorological monitoring: Changes of an environment, a climate, and weather are sensed and predicted.

Currently, if a RAN has a sensing capability derived from a millimeter-wave communication frequency band, the RAN may perform a sensing service and generate sensory data. However, how the RAN reports the sensory data to a sensing network element is still in an exploration phase. This application provides a sensory data transmission method, to improve reliability of sensory data transmission.

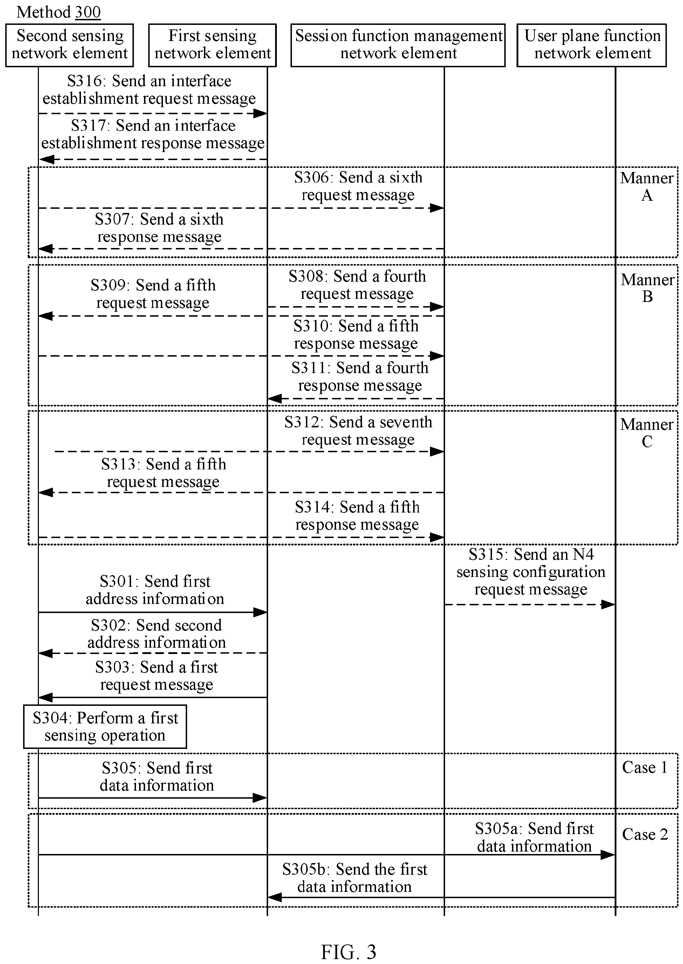

FIG. 3 is a schematic flowchart of a sensory data transmission method 300.

S301: A first sensing network element sends first address information of the first sensing network element to a second sensing network element, and correspondingly, the second sensing network element receives the first address information of the first sensing network element from the first sensing network element.

Optionally, in S302, the first sensing network element receives second address information of the second sensing network element from the second sensing network element, and correspondingly, the second sensing network element sends the second address information of the second sensing network element to the first sensing network element.

The first address information is used to establish a first data channel for transmitting sensory data between the first sensing network element and the second sensing network element.

It should be noted that, when the first sensing network element transmits the sensory data to the second sensing network element in a unidirectional manner, the second sensing network element may not send the second address information of the second sensing network element to the first sensing network element.

The first sensing network element may obtain, based on an internal requirement of a network or a requirement of a demand side for a sensing service, a sensing network element that can meet a sensing requirement, for example, the sensing network element 210 in FIG. 2.

The second sensing network element may execute the sensing service, and generate sensory data, and is, for example, the RAN 220 and the RAN 230 in FIG. 2.

The first data channel for transmitting the sensory data between the first sensing network element and the second sensing network element may be established in the following two manners, and the two manners are separately described as follows:

### Manner 1:

That the first sensing network element receives second address information of the second sensing network element from the second sensing network element includes:

The first sensing network element receives a second request message from the second sensing network element. The second request message is used to request to establish the first data channel, and the second request message includes the second address information of the second sensing network element.

That a first sensing network element sends first address information of the first sensing network element to a second sensing network element includes:

The first sensing network element sends a second response message to the second sensing network element. The second response message includes the first address information of the first sensing network element.

In this manner, the second sensing network element initiates establishment of the first data channel, the second sensing network element includes the address information of the second sensing network element in the initiated second request message (an establishment request message of the first data channel), and the first sensing network element includes the address information of the first sensing network element in the second response message in response to the second request message. In this way, establishment of the first data channel for transmitting the sensory data is completed.

### Manner 2:

That a first sensing network element sends first address information of the first sensing network element to a second sensing network element includes:

The first sensing network element sends a third request message to the second sensing network element. The third request message is used to request to establish the first data channel, and the third request message includes the first address information of the first sensing network element.

That the first sensing network element receives second address information of the second sensing network element from the second sensing network element includes:

The first sensing network element receives a third response message from the second sensing network element. The third response message includes the second address information of the second sensing network element.

In this manner, the first sensing network element initiates establishment of the first data channel, the first sensing network element includes the address information of the first sensing network element in the initiated third request message (an establishment request message of the first data channel), and the second sensing network element includes the address information of the second sensing network element in the third response message in response to the third request message. In this way, establishment of the first data channel for transmitting the sensory data is completed.

S303: The first sensing network element sends a first request message to the second sensing network element, and correspondingly, the second sensing network element receives the first request message from the first sensing network element.

The first request message is used to request the second sensing network element to perform a first sensing operation.

By way of example, and not limitation, the first sensing operation may be any one or more of the following operations: sensing a distance, sensing an angle, sensing object distribution within a range, sensing a speed, and the like.

S304: The second sensing network element performs the first sensing operation based on the first request message, to generate first data information.

For example, the second sensing network element performs sensing detection based on the first request message, obtains the sensory data, and generates the first data information.

S305: The first sensing network element receives the first data information that is sent by the second sensing network element through the first data channel, and correspondingly, the second sensing network element sends the first data information to the first sensing network element through the first data channel.

That the second sensing network element sends the first data information to the first sensing network element through the first data channel may include the following two cases.

### Case 1:

The second sensing network element sends the first data information to the first sensing network element without using a user plane function network element.

### Case 2:

The first sensing network element receives, from a user plane function network element, the first data information that is sent by the second sensing network element to the user plane function network element through a second data channel. The second data channel is associated with the first data channel.

Alternatively, step S305 includes steps S305a and S305b.

S305a: The second sensing network element sends the first data information to the user plane function network element through the second data channel.

S305b: The user function plane network element sends the first data information to the first sensing network element.

It should be noted that, if the second sensing network element is a RAN, the second data channel may be understood as an N3 channel newly established between the RAN and the user plane function network element.

That the N3 channel is associated with the first data channel may be understood as follows:

The first data channel is carried on the N3 channel, or the first data channel is bound to the N3 channel.

In a possible implementation, the first request message further includes identification information indicating the first sensing operation. The first data information includes first sensory data generated by performing the first sensing operation and an identifier of the first sensing operation, and the identifier of the first sensing operation indicates that the first sensory data corresponds to the first sensing operation.

The identification information indicating the first sensing operation may be understood as:
identification information indicating a first sensing service corresponding to the first sensing operation; or
identification information or indication information used to associate the first data information with a first sensing service corresponding to the first sensing operation.

In this case, the method 300 may further include the following:

The first sensing network element receives a sensing requirement message. The sensing requirement message is used to request to perform the first sensing operation.

The first sensing network element generates the identification information of the first sensing operation based on the sensing requirement message.

For example, the first sensing network element may receive a sensing requirement message (or a sensing service request message) from another network element. The sensing requirement message includes information indicating the first sensing operation. The first sensing network element may allocate an identifier to the first sensing operation (or the first sensing service corresponding to the first sensing operation), and include information indicating the identifier in the first request message. After receiving the identification information, the second sensing network element may learn, by using the identification information, the first sensing operation that needs to be performed. After performing the first sensing operation, the second sensing network element obtains the first sensory data, and sends the first sensory data and the identifier of the first sensing operation as the first data information to the first sensing network element. In this way, the first sensing network element may learn, by using the identifier in the first data information, that the first sensory data in the first data information is data corresponding to the first sensing operation. The another network element may be triggered by UE, an AF/AS, or another 5GS network element (for example, an AMF or an SMF) based on different sensing requirements. Optionally, the sensing service request message may be directly sent to the first sensing network element by the UE, the AF/AS, or the another 5GS network element (for example, the AMF or the SMF), or may be forwarded to the first sensing network element by an intermediate network element (for example, an NEF or an AMF).

Optionally, the first request message further includes configuration information indicating the first sensing operation.

For example, the configuration information of the first sensing operation may include any one or more of the following information: a sensing distance, a sensing angle, a sensing range, a sensing speed range, a distance resolution, a speed resolution, angle measurement precision (or an angle resolution), sensing duration, and a UE ID.

Therefore, the second sensing network element may perform the first sensing operation based on the configuration information in the first request message, to obtain required sensory data.

The first data channel may be established between the first sensing network element and the second sensing network element in Manner 1 or Manner 2, and the second sensing network element may directly send the first data information to the first sensing network element by using a data plane protocol or through a data plane path or a data plane channel, to improve a transmission rate for transmitting the first sensory data. In addition, in Case 1, the first data information is transmitted without using the UPF network element, so that performance of the UPF network element is not affected, and a delay of transmitting the first data information is reduced.

In another possible implementation, in Case 2, that the first sensing network element receives the first data information that is sent by the second sensing network element through the first data channel includes:

The first sensing network element receives, from the user plane function network element, the first data information that is sent by the second sensing network element to the user plane function network element through the second data channel. The second data channel is associated with the first data channel.

In other words, the second sensing network element may first send the first data information to the UPF network element through the second data channel, and the UPF network element sends the first data information to the first sensing network element.

The following describes manners of establishing the second data channel for transmitting the sensory data.

### Manner A:

The method 300 may include step S306 and step S307.

S306: The second sensing network element sends a sixth request message to a session function management network element SMF, and correspondingly, the session function management network element receives the sixth request message from the second sensing network element.

The sixth request message is used to request to establish the second data channel.

Optionally, the sixth request message includes an identifier (a RAN N3 tunnel ID) of the second data channel of an access network device.

Optionally, the sixth request message further includes sensing indication information, and the sensing indication information indicates that the second data channel is used to transmit the sensory data.

It should be noted that, if the second sensing network element has a capability of generating the first data information by performing operations such as detection or collection, only a case in which the second sensing network element sends the sensory data to the first sensing network element exists in a system. Because of no downlink transmission of the sensory data, the sixth request message may not include the identifier of the second data channel of the access network device.

S307: The session function management network element sends a sixth response message to the second sensing network element, and correspondingly, the second sensing network element receives the sixth response message from the session function management network element.

The sixth response message is used to respond to the sixth request message for establishing the second data channel.

The sixth request message includes an identifier (a CN N3 tunnel ID) of the second data channel of a core network.

In other words, in Manner A, the second sensing network element initiates establishment of the second data channel to the session function management network element.

### Manner B:

The method 300 may include steps S308 to S311.

S308: The first sensing network element sends a fourth request message to the session function management network element, and correspondingly, the session function management network element receives the fourth request message from the first sensing network element.

The fourth request message is used to request the session function management network element to establish the second data channel. Alternatively, the fourth request message is used to trigger the session function management network element to establish the second data channel. Alternatively, the fourth request message is used to request the session function management network element to send a fifth request message to the second sensing network element.

Optionally, the fourth request message further includes sensing indication information, and the sensing indication information indicates that the second data channel is used to transmit the sensory data.

S309: The session function management network element sends a fifth request message to the second sensing network element, and correspondingly, the second sensing network element receives the fifth request message from the session function management network element.

The fifth request message is used to establish the second data channel.

The fifth request message may include an identifier (a CN N3 tunnel ID) of the second data channel of a core network.

Optionally, the fifth request message further includes sensing indication information, and the sensing indication information indicates that the second data channel is used to transmit the sensory data.

S310: The second sensing network element sends a fifth response message to the session function management network element, and correspondingly, the session function management network element receives the fifth response message from the second sensing network element.

The fifth response message is used to respond to the fifth request message requesting to establish the second data channel.

Optionally, the fifth response message includes an identifier (a RAN N3 tunnel ID) of the second data channel of the access network device.

S311: The session function management network element sends a fourth response message to the first sensing network element, and correspondingly, the first sensing network element receives the fourth response message from the session function management network element.

The fourth response message is used to respond to the fourth request message.

In other words, in Manner B, the first sensing network element requests the session function management network element to initiate establishment of the second data channel to the second sensing network element.

### Manner C:

The method 300 may include steps S312 to S314.

S312: The second sensing network element sends a seventh request message to the session function management network element, and correspondingly, the session function management network element receives the seventh request message from the second sensing network element.

The seventh request message is used to request the session function management network element to establish the second data channel. Alternatively, the seventh request message is used to trigger the session function management network element to establish the second data channel. Alternatively, the seventh request message is used to request the session function management network element to send a fifth request message to the second sensing network element.

Optionally, the seventh request message further includes sensing indication information, and the sensing indication information indicates that the second data channel is used to transmit the sensory data.

S313: The session function management network element sends a fifth request message to the second sensing network element, and correspondingly, the second sensing network element receives the fifth request message from the session function management network element.

The fifth request message is used to establish the second data channel.

The fifth request message may include an identifier (a CN N3 tunnel ID) of the second data channel of a core network.

Optionally, the fifth request message further includes sensing indication information, and the sensing indication information indicates that the second data channel is used to transmit the sensory data.

S314: The second sensing network element sends a fifth response message to the session function management network element, and correspondingly, the session function management network element receives the fifth response message from the second sensing network element.

The fifth response message is used to respond to the fifth request message requesting to establish the second data channel.

Optionally, the fifth response message includes an identifier (a RAN N3 tunnel ID) of the second data channel of an access network device.

In other words, in Manner C, the second sensing network element requests the session function management network element to initiate establishment of the second data channel to the second sensing network element.

The foregoing describes three manners of initiating establishment of the second data channel. In addition, establishment of the second data channel may further include step S315. For example, step S315 may be performed after step S307 in Manner A, S310 in Manner B, or S314 in Manner C is performed.

S315: The session function management network element sends an N4 sensing configuration request message to the UPF network element.

The N4 sensing configuration request message includes the identifier (a CN N3 tunnel ID) of the second data channel of the core network.

Optionally, the N4 sensing configuration request message further includes sensing indication information, and the sensing indication information indicates that the second data channel is used to transmit the sensory data.

In addition, it should be noted that, in Manner B, the first sensing network element requests the session function management network element to initiate establishment of the second data channel to the second sensing network element. The second sensing network element needs to bind the first data channel (the first data channel established in Manner 1 or Manner 2) to the established second data channel, to transmit the sensory data through the second data channel.

In a possible implementation, the second sensing network element may obtain a channel association identifier in processes of establishing the first data channel and the second data channel, and bind the first data channel to the established second data channel based on the channel association identifier.

The following describes a manner in which the second sensing network element obtains the channel association identifier.

It should be noted that the system may first initiate establishment of the first data channel, and then initiate establishment of the second data channel. Alternatively, the system may first initiate establishment of the second data channel, and then initiate establishment of the first data channel.

### Manner a:

The first sensing network element determines a channel association identifier, where the channel association identifier indicates that the second data channel is associated with the first data channel.

If the first data channel uses Manner 1 (where the second sensing network element initiates establishment of the first data channel), the fourth request message in step S308 includes the channel association identifier, the fifth request message in step S309 includes the channel association identifier, and the second response message in Manner 1 includes the channel association identifier.

In other words, the first sensing network element generates the channel association identifier, and the first sensing network element sends the channel association identifier to the second sensing network element by using the fourth request message and the fifth request message in the process of establishing the second data channel, and sends the channel association identifier to the second sensing network element by using the second response message in the process of establishing the first data channel.

If the first data channel uses Manner 2 (where the first sensing network element initiates establishment of the first data channel), the fourth request message in step S308 includes the channel association identifier, the fifth request message in step S309 includes the channel association identifier, and the third request message in Manner 2 includes the channel association identifier.

In other words, the first sensing network element generates the channel association identifier, and the first sensing network element sends the channel association identifier to the second sensing network element by using the fourth request message and the fifth request message in the process of establishing the second data channel, and sends the channel association identifier to the second sensing network element by using the third request message in the process of establishing the first data channel.

### Manner b:

The second sensing network element determines a channel association identifier, where the channel association identifier indicates that the second data channel is associated with the first data channel.

If the first data channel uses Manner 1 (where the second sensing network element initiates establishment of the first data channel), and the system first initiates establishment of the first data channel, the second request message in Manner 1 includes the channel association identifier, the fourth request message in step S308 includes the channel association identifier, and the fifth request message in step S309 includes the first channel association identifier.

In other words, the second sensing network element generates the channel association identifier, the second sensing network element sends the channel association identifier to the first sensing network element by using the second request message in the process of establishing the first data channel, and the first sensing network element sends the channel association identifier to the second sensing network element by using the fourth request message and the fifth request message in the process of establishing the second data channel.

If the first data channel uses Manner 1 (where the second sensing network element initiates establishment of the first data channel), and the system first initiates establishment of the second data channel, the fifth response message in step S310 includes the channel association identifier, the fourth response message in step S311 includes the channel association identifier, and the second response message in Manner 1 includes the channel association identifier.

In other words, the second sensing network element generates the channel association identifier, the second sensing network element sends the channel association identifier to the first sensing network element by using the fifth response message and the fourth response message in the process of establishing the second data channel, and the first sensing network element sends the channel association identifier to the second sensing network element by using the second response message in the process of establishing the first data channel.

If the first data channel uses Manner 2 (where the first sensing network element initiates establishment of the first data channel), and the system first initiates establishment of the first data channel, the third response message in Manner 2 includes the channel association identifier, the fourth request message in step S308 includes the channel association identifier, and the fifth request message in step S309 includes the first channel association identifier.

In other words, the second sensing network element generates the channel association identifier, the second sensing network element sends the channel association identifier to the first sensing network element by using the third response message in the process of establishing the first data channel, and the first sensing network element sends the channel association identifier to the second sensing network element by using the fourth request message and the fifth request message in the process of establishing the second data channel.

If the first data channel uses Manner 2 (where the second sensing network element initiates establishment of the first data channel), and the system first initiates establishment of the second data channel, the fifth response message in step S310 includes the channel association identifier, the fourth response message in step S311 includes the channel association identifier, and the third request message in Manner 2 includes the channel association identifier.

In other words, the second sensing network element generates the channel association identifier, the second sensing network element sends the channel association identifier to the first sensing network element by using the fifth response message and the fourth response message in the process of establishing the second data channel, and the first sensing network element sends the channel association identifier to the second sensing network element by using the third request message in the process of establishing the first data channel.

### Manner c:

The session function management network element determines a channel association identifier, where the channel association identifier indicates that the second data channel is associated with the first data channel.

It should be noted that in Manner c, the system first initiates establishment of the second data channel.

If the first data channel uses Manner 1 (where the second sensing network element initiates establishment of the first data channel), the fifth request message in step S309 includes the channel association identifier, the fourth response message in step S311 includes the first channel association identifier, and the second response message in Manner 1 includes the first channel association identifier.

In other words, the session function management network element generates the channel association identifier, the session function management network element may send the channel association identifier to the second sensing network element by using the fifth request message, and send the channel association identifier to the first sensing network element by using the fourth response message in the process of establishing the second data channel, and the first sensing network element sends the channel association identifier to the second sensing network element by using the second response message in the process of establishing the first data channel.

If the first data channel uses Manner 2 (where the first sensing network element initiates establishment of the first data channel), the fifth request message in step S309 includes the channel association identifier, the fourth response message in step S311 includes the first channel association identifier, and the third request message in Manner 2 includes the channel association identifier.

In other words, the session function management network element generates the channel association identifier, the session function management network element may send the channel association identifier to the second sensing network element by using the fifth request message, and send the channel association identifier to the first sensing network element by using the fourth response message in the process of establishing the second data channel, and the first sensing network element sends the channel association identifier to the second sensing network element by using the third request message in the process of establishing the first data channel.

In a possible implementation, before step S301, the method 300 further includes steps S316 and S317.

S316: The second sensing network element sends an interface establishment request message to the first sensing network element, and correspondingly, the first sensing network element receives the interface establishment request message from the second sensing network element.

The interface establishment request message includes first capability information, and the first capability information indicates a sensing capability of the second sensing network element.

The interface establishment request message may further include an identifier of the second sensing network element.

For example, the first capability information indicates a capability of the second sensing network element for performing a sensing operation, for example, a capability of the second sensing network element for performing operations such as sensing a distance, sensing an angle, sensing a range, and sensing a speed. For example, the sensing capability may include one or more of the following: sensing a distance, sensing an angle, sensing a range, sensing a speed range, sensing a distance resolution, sensing a speed resolution, and sensing angle measurement precision (or an angle resolution).

S317: The first sensing network element sends an interface establishment response message to the second sensing network element, and correspondingly, the second sensing network element receives the interface establishment response message from the first sensing network element.

Optionally, the interface establishment response message includes second capability information, and the second capability information indicates a sensing capability of the first sensing network element.

The interface establishment response message may further include an identifier of the first sensing network element.

In a possible implementation, before step S316, the first sensing network element may alternatively send, to the second sensing network element, a request for requesting the second sensing network element to establish an interface. This is not particularly limited in this application.

In addition, in a possible implementation, the system further includes an AMF network element.

In this case, in step S316, the second sensing network element sends the interface establishment request message to the first sensing network element via the AMF network element. Optionally, the AMF network element receives the interface establishment request message, may select the first sensing network element, and send the interface establishment request message to the second sensing network element. In step S317, the first sensing network element sends the interface establishment response message via the AMF network element.

In addition, in Manner 1, the second sensing network element sends the second request message to the first sensing network element via the AMF network element, and the first sensing network element sends the second response message to the second sensing network element via the AMF network element.

In Manner 2, the first sensing network element sends the third request message to the second sensing network element via the AMF network element, and the second sensing network element sends the third response message to the first sensing network element via the AMF network element.

In step S303, the first sensing network element sends the first request message to the second sensing network element via the AMF network element.

Similarly, in the process of establishing the second data channel, a message is also forwarded between the first sensing network element and the second sensing network element via the AMF network element. For brevity, details are not described herein again.

It should be noted that the AMF may achieve a direct forwarding function between the first sensing network element and the second sensing network element, or may process a received message and then forward the message. This is not particularly limited in this application.

In addition, after receiving the first data information, the first sensing network element may return the first data information to a requester, or may return the first data information to a requester after processing the first data information. This is not particularly limited in this application.

Therefore, in this application, the first data channel may be established between the first sensing network element and the second sensing network element, and the second sensing network element may send the first data information to the first sensing network element by using the data plane protocol, to improve the transmission rate for transmitting the first sensory data.

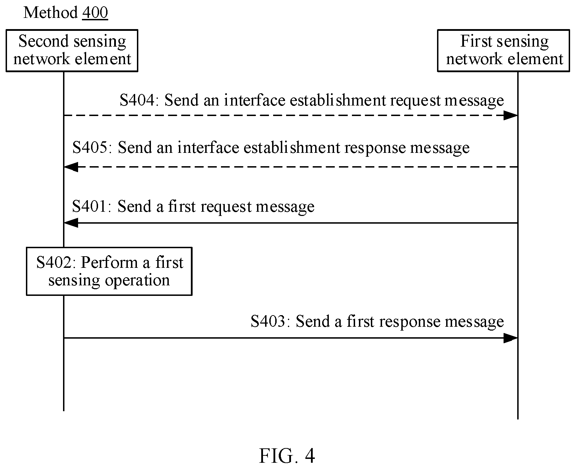

FIG. 4 is a schematic flowchart of a sensory data transmission method 400.

S401: A first sensing network element sends a first request message to a second sensing network element, and correspondingly, the second sensing network element receives the first request message from the first sensing network element.

The first request message is used to request the second sensing network element to perform a first sensing operation.

The first request message is similar to that described in the method 300. For brevity, details are not described herein again.

S402: The second sensing network element performs the first sensing operation based on the first request message, to generate first data information.

A manner in which the second sensing network element performs the first sensing operation to generate the first data information is similar to that described in the method 300. For brevity, details are not described herein again.

S403: The second sensing network element sends a first response message to the first sensing network element, and correspondingly, the first sensing network element receives the first response message from the second sensing network element.

The first response message includes the first data information.

Therefore, in this application, the second sensing network element may transmit the first data information by using a control plane protocol, and a control plane and a data plane use a same protocol. This can improve efficiency of sensory data transmission.

In a possible implementation, the first request message further includes identification information indicating the first sensing operation, and the first response message includes an identifier of the first sensing operation.

The identifier of the first sensing operation is similar to that described in step S305 in the method 300. For brevity, details are not described herein again.

In a possible implementation, before step S401, the method 400 further includes steps S404 and S405.

S404: The second sensing network element sends an interface establishment request message to the first sensing network element, and correspondingly, the first sensing network element receives the interface establishment request message from the second sensing network element.

The interface establishment request message includes first capability information, and the first capability information indicates a sensing capability of the second sensing network element.

The interface establishment request identifier may further include an identifier of the second sensing network element.

For example, the first capability information indicates a capability of the second sensing network element for performing a sensing operation, for example, a capability of the second sensing network element for performing operations such as sensing a distance, sensing an angle, sensing a range, and sensing a speed. For example, the sensing capability may include one or more of the following: sensing a distance, sensing an angle, sensing a range, sensing a speed range, sensing a distance resolution, sensing a speed resolution, and sensing angle measurement precision (or an angle resolution).

S405: The first sensing network element sends an interface establishment response message to the second sensing network element, and correspondingly, the second sensing network element receives the interface establishment response message from the first sensing network element.

Optionally, the interface establishment response message includes second capability information, and the second capability information indicates a sensing capability of the first sensing network element.

The interface establishment response message may further include an identifier of the first sensing network element.

In addition, in a possible implementation, a system further includes an AMF network element.

In this case, in step S404, the second sensing network element sends the interface establishment request message to the first sensing network element via the AMF network element. Optionally, the AMF network element receives the interface establishment request message, may select the first sensing network element, and send the interface establishment request message to the second sensing network element. In step S404, the first sensing network element sends the interface establishment response message via the AMF network element.

In step S401, the first sensing network element sends the first request message to the second sensing network element via the AMF network element.

In step S403, the second sensing network element sends the first response message to the first sensing network element via the AMF network element.

It should be noted that the AMF may achieve a direct forwarding function between the first sensing network element and the second sensing network element, or may process a received message and then forward the message. This is not particularly limited in this application.

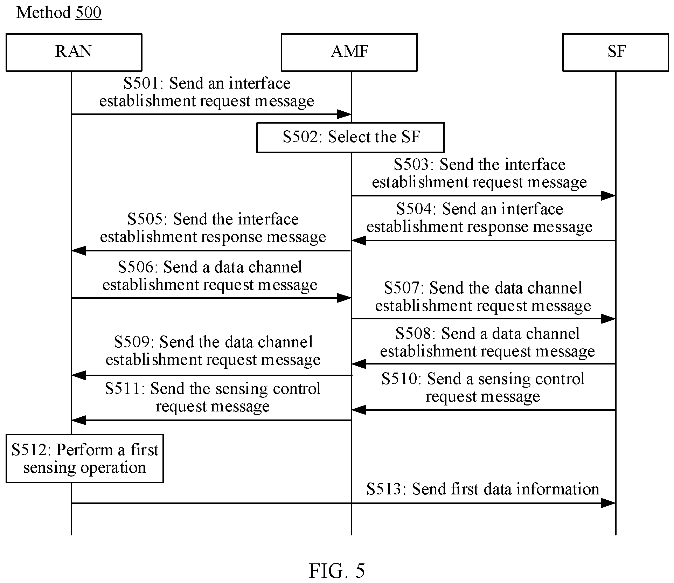

For ease of understanding embodiments of this application, the following describes embodiments provided in this application by using examples with reference to FIG. 5 to FIG. 12. The following uses an example in which a first sensing network element is a sensing (sensing function, SF) network element, a second sensing network element is a RAN network element, and a second data channel is an N3 channel.

It should be noted that, in embodiments provided in this application, a message may be transmitted between the SF network element and the RAN network element via an AMF network element, or may not be transmitted via the AMF network element. In the following embodiments, an example in which a message is transmitted between the SF network element and the RAN network element via the AMF network element is used. This is not limited herein.

FIG. 5 is a schematic flowchart of a data transmission method 500.

If an interface needs to be established, by way of example, and not limitation, S501 to S505 provide an interface establishment manner.

S501: A RAN sends an interface establishment request message to an AMF.

The interface establishment request message includes a RAN ID.

The interface establishment request message may further include first capability information. For descriptions of the first capability information, refer to the descriptions in the method 300. For brevity, details are not described herein again.

S502: The AMF selects an SF.

S503: The AMF sends the interface establishment request message to the SF.

S504: The SF sends an interface establishment response message to the AMF.

The interface establishment response message includes an SF ID.

Optionally, the interface establishment response message may further include second capability information. For descriptions of the second capability information, refer to the descriptions in the method 300. For brevity, details are not described herein again.

S505: The AMF sends the interface establishment response message to the RAN.

S506: The RAN sends a data channel establishment request message (an example of a second request message) to the AMF.

The data channel establishment request message is used to request to establish a first data channel for transmitting sensory data.

The data channel establishment request message includes RAN address information.

S507: The AMF sends the data channel establishment request message to the SF.

S508: The SF sends a data channel establishment response message (an example of the second response message) to the AMF.

The data channel establishment response message includes SF address information.

S509: The AMF sends the data channel establishment response message to the RAN.

S510: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S511: The AMF sends the sensing control request message to the RAN.

S512: The RAN performs the first sensing operation based on the sensing control request message, to generate first data information.

A manner in which the RAN performs the first sensing operation to generate the first data information is similar to that described in the method 300. For brevity, details are not described herein again.

S513: The RAN sends the first data information to the SF through a data channel.

Optionally, the first data information further includes data for performing the first sensing operation and the identifier of the first sensing operation.

Therefore, in this application, the RAN sends the sensory data to the SF by using a data plane protocol without using a UPF, and big data transmission may be performed on a data plane, to improve a rate of sensory data transmission. Without using the UPF, performance of the UPF is not affected, and a delay is reduced. In addition, the AMF can forward sensing control-plane signaling between the RAN and the SF, so that an existing 5GS interface is compatible and can be reused, and compatibility is high, and commercial deployment of a sensing feature is facilitated.

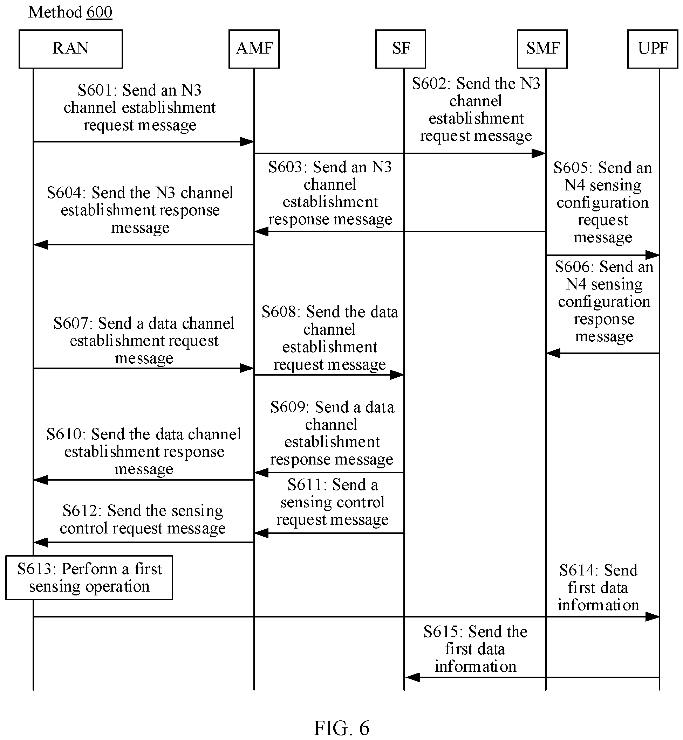

FIG. 6 is a schematic flowchart of a data transmission method 600.

It should be noted that the method 600 may also include the operations of steps S501 to S505 in the method 500. For brevity, details are not described herein again.

S601: A RAN sends an N3 channel establishment request message (an example of a sixth request message) to an AMF.

The N3 channel establishment request message is used to request to establish an N3 channel.

Optionally, the N3 channel establishment request message includes an identifier (a RAN N3 tunnel ID) of the N3 channel of an access network device.

Optionally, the N3 channel establishment request message further includes sensing indication information, and the sensing indication information indicates that the N3 channel is used to transmit sensory data.

S602: The AMF sends the N3 channel establishment request message to an SMF.

S603: The SMF sends an N3 channel establishment response message (an example of a sixth response message) to the AMF.

The N3 channel establishment response message includes an identifier (a CN N3 tunnel ID) of the N3 channel of a core network.

S604: The AMF sends the N3 channel establishment response message to the RAN.

S605: The SMF sends an N4 sensing configuration request message to a UPF.

The N4 sensing configuration request message includes the identifier of the N3 channel of the core network.

Optionally, the N4 sensing configuration request message includes sensing indication information, and the sensing indication information indicates that the N3 channel is used to transmit the sensory data.

S606: The UPF sends an N4 sensing configuration response message to the SMF.

S607: The RAN sends a data channel establishment request message (an example of a second request message) to the AMF.

The data channel establishment request message is used to request to establish a first data channel for transmitting the sensory data, and the data channel establishment request message includes RAN address information.

S608: The AMF sends the data channel establishment request message to an SF.

S609: The SF sends a data channel establishment response message (an example of a second response message) to the AMF.

The data channel establishment response message includes SF address information.

S610: The AMF sends the data channel establishment response message to the RAN.

S611: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S612: The AMF sends the sensing control request message to the RAN.

S613: The RAN performs the first sensing operation based on the sensing control request message, to generate first data information.

A manner in which the RAN performs the first sensing operation to generate the first data information is similar to that described in the method 300. For brevity, details are not described herein again.

S614: The RAN sends the first data information to the UPF through the N3 channel.

Optionally, the first data information further includes data for performing the first sensing operation and the identifier of the first sensing operation.

Optionally, an encapsulation manner of the first data information may be: An N3 channel address between the RAN and the UPF is an outer address, a data channel address between the RAN and the SF is an inner address, and data generated by performing the first sensing operation and/or the identifier of the first sensing operation are/is transmitted data.

S615: The UPF sends the first data information to the SF.

Therefore, in this application, when the RAN sends the sensory data to the SF via the UPF, N3 interface logic between the RAN and the UPF may be used, to avoid adding a direct interface between the RAN and the SF. In addition, the UPF is more applicable to uploading sensory data per UE. This is compatible with existing logic processing per UE.

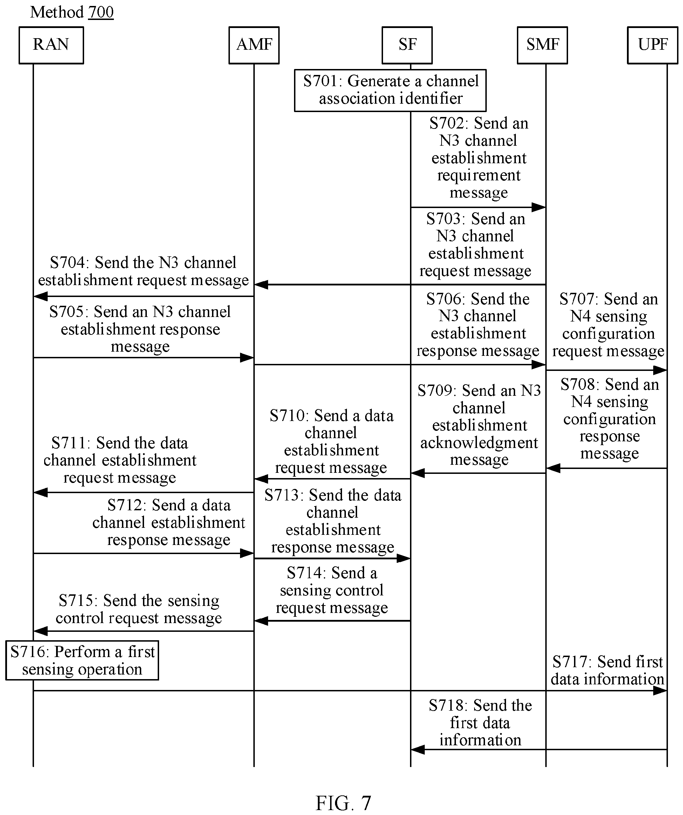

FIG. 7 is a schematic flowchart of a data transmission method 700.

It should be noted that the method 700 may also include the operations of steps S501 to S505 in the method 500. For brevity, details are not described herein again.

S701: An SF generates a channel association identifier.

The channel association identifier indicates that an N3 channel is associated with a data channel between the SF and a RAN.

S702: The SF sends an N3 channel establishment requirement message (an example of a fourth request message) to an SMF.

Optionally, the N3 channel establishment requirement message includes sensing indication information, and the sensing indication information indicates that the N3 channel is used to transmit sensory data.

The N3 channel establishment requirement message includes the channel association identifier.

S703: The SMF sends an N3 channel establishment request message (an example of a fifth request message) to an AMF.

The N3 channel establishment request message may include an identifier (a CN N3 tunnel ID) of the N3 channel of a core network.

Optionally, the N3 channel establishment request message further includes sensing indication information, and the sensing indication information indicates that the N3 channel is used to transmit the sensory data.

Optionally, a target RAN ID or a target cell identifier is further included, and is used by the SMF to establish an N3 channel with a RAN corresponding to the target RAN ID or the target cell identifier.

Optionally, the N3 channel establishment request message includes the channel association identifier.

S704: The AMF sends the N3 channel establishment request message to the RAN.

S705: The RAN sends an N3 channel establishment response message (an example of a fifth response message) to the AMF.

Optionally, the N3 channel establishment response message includes an identifier (a RAN N3 tunnel ID) of the N3 channel of an access network device.

S706: The AMF sends the N3 channel establishment response message to the SF.

S707: The SMF sends an N4 sensing configuration request message to a UPF.

The N4 sensing configuration request message includes the identifier of the N3 channel of the core network.

Optionally, the N4 sensing configuration request message includes sensing indication information, and the sensing indication information indicates that the N3 channel is used to transmit the sensory data.

S708: The UPF sends an N4 sensing configuration response message to the SMF.

S709: The SMF sends an N3 channel establishment requirement acknowledgment message (an example of a fourth response message) to the SF.

S710: The SF sends a data channel establishment request message (an example of a third request message) to the AMF.

The data channel establishment request message is used to request to establish a first data channel for transmitting the sensory data.

The data channel establishment request message includes SF address information.

The data channel establishment request message includes the channel association identifier.

S711: The AMF sends the data channel establishment request message to the RAN.

S712: The RAN sends a data channel establishment response message (an example of a third response message) to the AMF.

The data channel establishment response message includes RAN address information.

S713: The AMF sends the data channel establishment response message to the SF.

The RAN may bind a data channel between the RAN and the SF to a corresponding N3 channel based on the channel association identifier.

S714: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S715: The AMF sends the sensing control request message to the RAN.

S716: The RAN performs the first sensing operation based on the sensing control request message, to generate first data information.

A manner in which the RAN performs the first sensing operation to generate the first data information is similar to that described in the method 300. For brevity, details are not described herein again.

S717: The RAN sends the first data information to the UPF through a data channel.

Optionally, the first data information further includes data for performing the first sensing operation and the identifier of the first sensing operation.

Optionally, an encapsulation manner of the first data information may be: An N3 channel address between the RAN and the UPF is an outer address, a data channel address between the RAN and the SF is an inner address, and data generated by performing the first sensing operation and/or the identifier of the first sensing operation are/is transmitted data.

S718: The UPF sends the first data information to the SF.

Therefore, in this application, when the RAN sends the sensory data to the SF via the UPF, N3 interface logic between the RAN and the UPF may be used, to avoid adding a direct interface between the RAN and the SF. In addition, the UPF is more applicable to uploading sensory data per UE. This is compatible with existing logic processing per UE. Furthermore, the SF may initiate establishment of a data channel and an N3 channel based on a sensing requirement, to improve flexibility and efficiency of sensory data transmission.

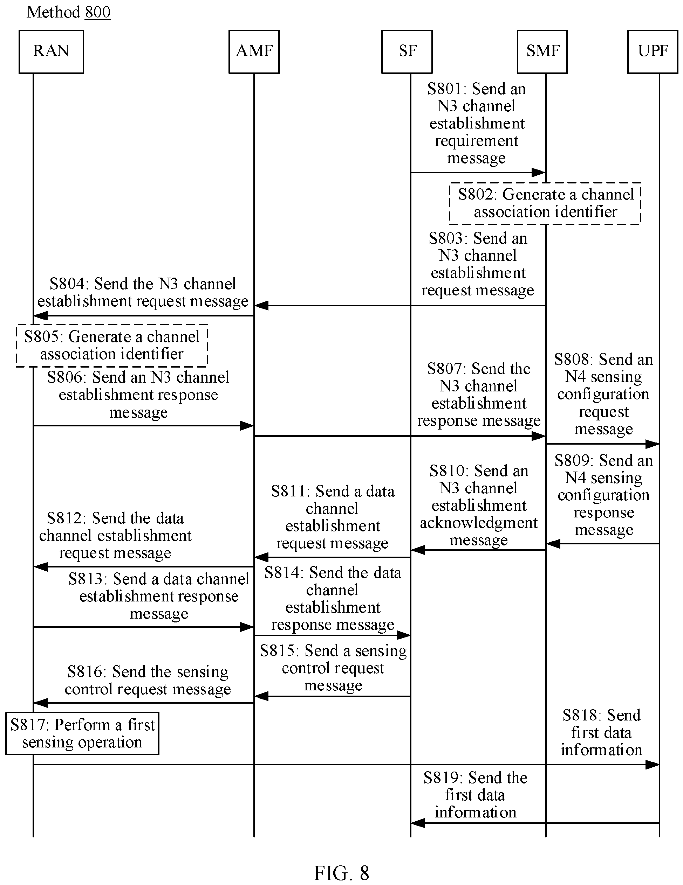

FIG. 8 is a schematic flowchart of a sensory data transmission method 800.

It should be noted that the method 800 may also include the operations of steps S501 to S505 in the method 500. For brevity, details are not described herein again.

S801: An SF sends an N3 channel establishment requirement message (an example of a fourth request message) to an SMF.

Optionally, the N3 channel establishment requirement message includes sensing indication information, and the sensing indication information indicates that an N3 channel is used to transmit sensory data.

Optionally, in S802, the SMF generates a channel association identifier.

Optionally, a target RAN ID or a target cell identifier is further included, and is used by the SMF to establish an N3 channel with a RAN corresponding to the target RAN ID or the target cell identifier.

The channel association identifier indicates that the N3 channel is associated with a first data channel between the SF and the RAN.

S803: The SMF sends an N3 channel establishment request message (an example of a fifth request message) to an AMF.

The N3 channel establishment request message may include an identifier (a CN N3 tunnel ID) of an N3 channel of a core network.

Optionally, the N3 channel establishment request message further includes sensing indication information, and the sensing indication information indicates that the N3 channel is used to transmit the sensory data.

Optionally, when the SMF generates the channel association identifier, the N3 channel establishment request message includes the channel association identifier.

S804: The AMF sends the N3 channel establishment request message to the RAN.

Optionally, in S805, the RAN generates a channel association identifier.

S806: The RAN sends an N3 channel establishment response message (an example of a fifth response message) to the AMF.

Optionally, the N3 channel establishment response message includes an identifier (a RAN N3 tunnel ID) of an N3 channel of an access network device.

Optionally, when the RAN generates the channel association identifier, the N3 channel establishment response message includes the channel association identifier.

S807: The AMF sends the N3 channel establishment response message to the SF.

S808: The SMF sends an N4 sensing configuration request message to a UPF.

The N4 sensing configuration request message includes the identifier of the N3 channel of the core network.

Optionally, the N4 sensing configuration request message includes sensing indication information, and the sensing indication information indicates that the N3 channel is used to transmit the sensory data.

S809: The UPF sends an N4 sensing configuration response message to the SMF.

S810: The SMF sends an N3 channel establishment requirement acknowledgment message (an example of a fourth response message) to the SF.

Optionally, the N3 channel establishment requirement acknowledgment message includes the channel association identifier.

S811: The SF sends a data channel establishment request message (an example of a third request message) to the AMF.

The data channel establishment request message includes SF address information.

Optionally, the data channel establishment request message includes the channel association identifier.

S812: The AMF sends the data channel establishment request message to the RAN.

S813: The RAN sends a data channel establishment response message (an example of a third response message) to the AMF.

The data channel establishment response message includes RAN address information.

S814: The AMF sends the data channel establishment response message to the SF.

Optionally, the RAN may bind the first data channel between the RAN and the SF to a corresponding N3 channel based on the channel association identifier.

S815: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S816: The AMF sends the sensing control request message to the RAN.

S817: The RAN performs the first sensing operation based on the sensing control request message, to generate first data information.

A manner in which the RAN performs the first sensing operation to generate the first data information is similar to that described in the method 300. For brevity, details are not described herein again.

S818: The RAN sends the first data information to the UPF through a data channel.

Optionally, the first data information further includes data for performing the first sensing operation and the identifier of the first sensing operation.

Optionally, an encapsulation manner of the first data information may be: An N3 channel address between the RAN and the UPF is an outer address, a data channel address between the RAN and the SF is an inner address, and data generated by performing the first sensing operation and/or the identifier of the first sensing operation are/is transmitted data.

S819: The UPF sends the first data information to the SF.

Therefore, in this application, when the RAN sends the sensory data to the SF via the UPF, N3 interface logic between the RAN and the UPF may be used, to avoid adding a direct interface between the RAN and the SF. In addition, the UPF is more applicable to uploading sensory data per UE. This is compatible with existing logic processing per UE. Furthermore, the SF may initiate establishment of a data channel and an N3 channel based on a sensing requirement, to improve flexibility and efficiency of sensory data transmission.

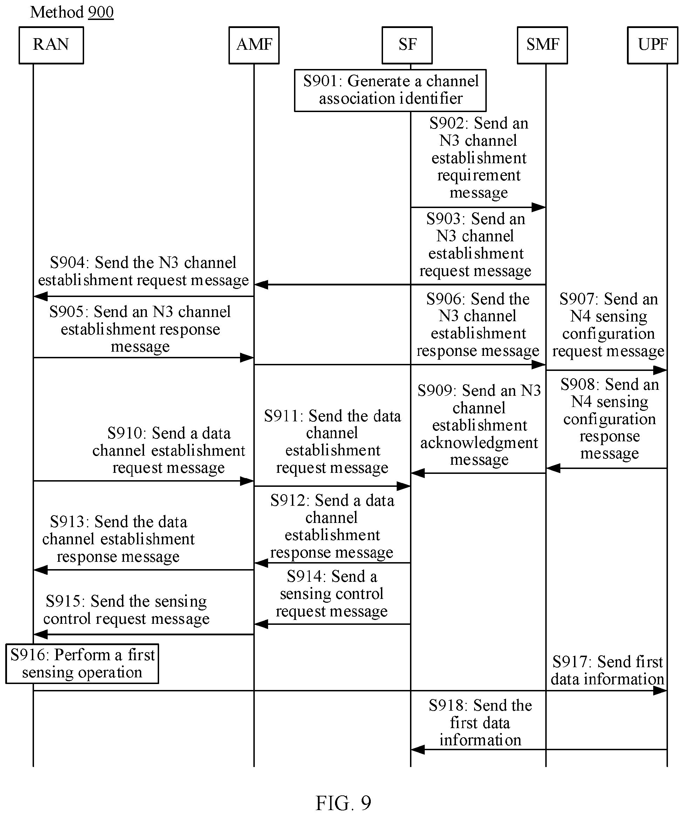

FIG. 9 is a schematic flowchart of a sensory data transmission method 900.

It should be noted that the method 900 may also include the operations of steps S501 to S505 in the method 500. For brevity, details are not described herein again.

S901: An SF generates a channel association identifier.

The channel association identifier indicates that an N3 channel is associated with a data channel between the SF and a RAN.

S902: The SF sends an N3 channel establishment requirement message (an example of a fourth request message) to an SMF.

Optionally, the N3 channel establishment requirement message includes sensing indication information, and the sensing indication information indicates that the N3 channel is used to transmit sensory data.

Optionally, a target RAN ID or a target cell identifier is further included, and is used by the SMF to establish an N3 channel with a RAN corresponding to the target RAN ID or the target cell identifier.

Optionally, the N3 channel establishment requirement message includes the channel association identifier.

S903: The SMF sends an N3 channel establishment request message (an example of a fifth request message) to an AMF.

The N3 channel establishment request message may include an identifier (a CN N3 tunnel ID) of the N3 channel of a core network.

Optionally, the N3 channel establishment request message further includes sensing indication information, and the sensing indication information indicates that the N3 channel is used to transmit the sensory data.

Optionally, the N3 channel establishment request message includes the channel association identifier.

S904: The AMF sends the N3 channel establishment request message to the RAN.

S905: The RAN sends an N3 channel establishment response message (an example of a fifth response message) to the AMF.

Optionally, the N3 channel establishment response message includes an identifier (a RAN N3 tunnel ID) of the N3 channel of an access network device.

S906: The AMF sends the N3 channel establishment response message to the SF.

S907: The SMF sends an N4 sensing configuration request message to a UPF.

The N4 sensing configuration request message includes the identifier of the N3 channel of the core network.

Optionally, the N4 sensing configuration request message includes sensing indication information, and the sensing indication information indicates that the N3 channel is used to transmit the sensory data.

S908: The UPF sends an N4 sensing configuration response message to the SMF.

S909: The SMF sends an N3 channel establishment requirement acknowledgment message (an example of a fourth response message) to the SF.

S910: The RAN sends a data channel establishment request message (an example of a second request message) to the AMF.

The data channel establishment request message is used to request to establish a first data channel for transmitting the sensory data, and the data channel establishment request message includes RAN address information.

S911: The AMF sends the data channel establishment request message to the SF.

S912: The SF sends a data channel establishment response message (an example of a second response message) to the AMF.

The data channel establishment response message includes SF address information.

Optionally, the data channel establishment response message includes the channel association identifier.

S913: The AMF sends the data channel establishment response message to the RAN.

Optionally, the RAN may bind the first data channel between the RAN and the SF to a corresponding N3 channel based on the channel association identifier.

S914: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S915: The AMF sends the sensing control request message to the RAN.

S916: The RAN performs the first sensing operation based on the sensing control request message, to generate first data information.

A manner in which the RAN performs the first sensing operation to generate the first data information is similar to that described in the method 300. For brevity, details are not described herein again.

S917: The RAN sends the first data information to the UPF through a data channel.

Optionally, the first data information further includes data for performing the first sensing operation and the identifier of the first sensing operation.

Optionally, an encapsulation manner of the first data information may be: An N3 channel address between the RAN and the UPF is an outer address, a data channel address between the RAN and the SF is an inner address, and data generated by performing the first sensing operation and/or the identifier of the first sensing operation are/is transmitted data.

S918: The UPF sends the first data information to the SF.

Therefore, in this application, when the RAN sends the sensory data to the SF via the UPF, N3 interface logic between the RAN and the UPF may be used, to avoid adding a direct interface between the RAN and the SF. In addition, the UPF is more applicable to uploading sensory data per UE. This is compatible with existing logic processing per UE. Furthermore, the SF may initiate establishment of an N3 channel based on a sensing requirement, to improve flexibility and efficiency of sensory data transmission.

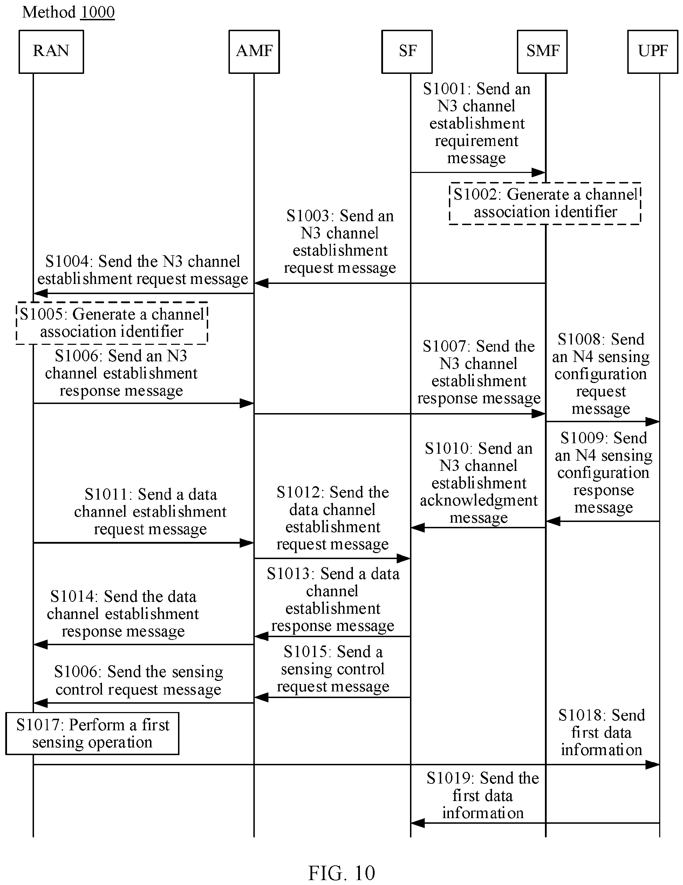

FIG. 10 is a schematic flowchart of a sensory data transmission method 1000.

It should be noted that the method 1000 may also include the operations of steps S501 to S505 in the method 500. For brevity, details are not described herein again.

S1001: An SF sends an N3 channel establishment requirement message (an example of a fourth request message) to an SMF.

Optionally, the N3 channel establishment requirement message includes sensing indication information, and the sensing indication information indicates that an N3 channel is used to transmit sensory data.

Optionally, a target RAN ID or a target cell identifier is further included, and is used by the SMF to establish an N3 channel with a RAN corresponding to the target RAN ID or the target cell identifier.

Optionally, in S1002, the SMF generates a channel association identifier.

The channel association identifier indicates that the N3 channel is associated with a data channel between the SF and the RAN.

S1003: The SMF sends an N3 channel establishment request message (an example of a fifth request message) to an AMF.

The N3 channel establishment request message may include an identifier (a CN N3 tunnel ID) of an N3 channel of a core network.

Optionally, the N3 channel establishment request message further includes sensing indication information, and the sensing indication information indicates that the N3 channel is used to transmit the sensory data.

Optionally, when the SMF generates the channel association identifier, the N3 channel establishment request message includes the channel association identifier.

S1004: The AMF sends the N3 channel establishment request message to the RAN.

Optionally, in S1005, the RAN generates a channel association identifier.

S1006: The RAN sends an N3 channel establishment response message (an example of a fifth response message) to the AMF.

Optionally, the N3 channel establishment response message includes an identifier (a RAN N3 tunnel ID) of an N3 channel of an access network device.

Optionally, when the RAN generates the channel association identifier, the N3 channel establishment response message includes the channel association identifier.

S1007: The AMF sends the N3 channel establishment response message to the SF.

S1008: The SMF sends an N4 sensing configuration request message to a UPF.

The N4 sensing configuration request message includes the identifier of the N3 channel of the core network.

Optionally, the N4 sensing configuration request message includes sensing indication information, and the sensing indication information indicates that the N3 channel is used to transmit the sensory data.

S1009: The UPF sends an N4 sensing configuration response message to the SMF.

S1010: The SMF sends an N3 channel establishment requirement acknowledgment message (an example of a fourth response message) to the SF.

Optionally, the N3 channel establishment requirement acknowledgment message includes the channel association identifier.

S1011: The RAN sends a data channel establishment request message (an example of a second request message) to the AMF.

The data channel establishment request message is used to request to establish a first data channel for transmitting the sensory data, and the data channel establishment request message includes RAN address information.

S1012: The AMF sends the data channel establishment request message to the SF.

S1013: The SF sends a data channel establishment response message (an example of a second response message) to the AMF.

The data channel establishment response message includes SF address information.

Optionally, the data channel establishment response message includes the channel association identifier.

S1014: The AMF sends the data channel establishment response message to the RAN.

Optionally, the RAN may bind the first data channel between the RAN and the SF to a corresponding N3 channel based on the channel association identifier.

S1015: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S1016: The AMF sends the sensing control request message to the RAN.

S1017: The RAN performs the first sensing operation based on the sensing control request message, to generate first data information.

A manner in which the RAN performs the first sensing operation to generate the first data information is similar to that described in the method 300. For brevity, details are not described herein again.

S1018: The RAN sends the first data information to the UPF through a data channel.

Optionally, the first data information further includes data for performing the first sensing operation and the identifier of the first sensing operation.

Optionally, an encapsulation manner of the first data information may be: An N3 channel address between the RAN and the UPF is an outer address, a data channel address between the RAN and the SF is an inner address, and data generated by performing the first sensing operation and/or the identifier of the first sensing operation are/is transmitted data.

S1019: The UPF sends the first data information to the SF.

Therefore, in this application, when the RAN sends the sensory data to the SF via the UPF, N3 interface logic between the RAN and the UPF may be used, to avoid adding a direct interface between the RAN and the SF. In addition, the UPF is more applicable to uploading sensory data per UE. This is compatible with existing logic processing per UE. Furthermore, the SF may initiate establishment of an N3 channel based on a sensing requirement, to improve flexibility and efficiency of sensory data transmission.

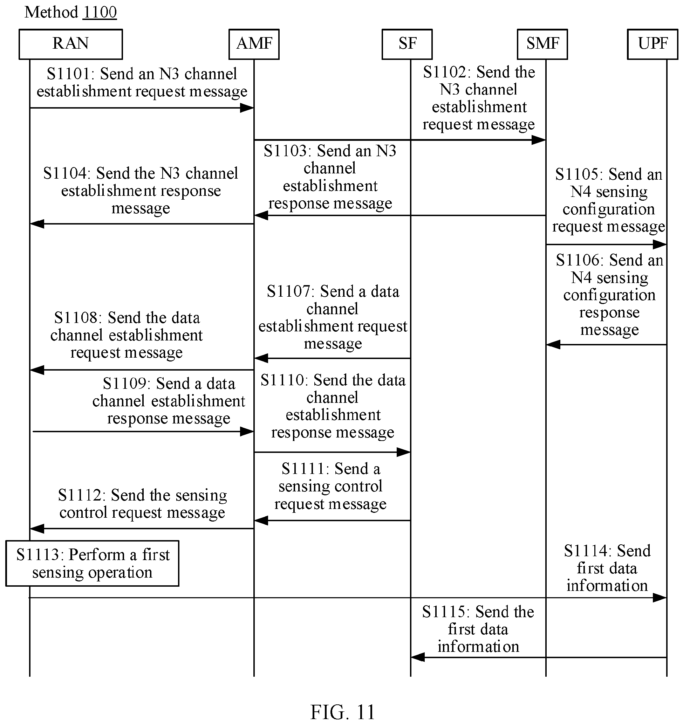

FIG. 11 is a schematic flowchart of a data transmission method 1100.

It should be noted that the method 1100 may also include the operations of steps S501 to S505 in the method 500. For brevity, details are not described herein again.

S1101: ARAN sends an N3 channel establishment request message (an example of a sixth request message) to an AMF.

The N3 channel establishment request message is used to request to establish an N3 channel.

Optionally, the N3 channel establishment request message includes an identifier (a RAN N3 tunnel ID) of the N3 channel of an access network device.

Optionally, the N3 channel establishment request message further includes sensing indication information, and the sensing indication information indicates that the N3 channel is used to transmit sensory data.

S1102: The AMF sends the N3 channel establishment request message to an SMF.

S1103: The SMF sends an N3 channel establishment response message (an example of a sixth response message) to the AMF.

The N3 channel establishment response message includes an identifier (a CN N3 tunnel ID) of the N3 channel of a core network.

S1104: The AMF sends the N3 channel establishment response message to the RAN.

S1105: The SMF sends an N4 sensing configuration request message to a UPF.

The N4 sensing configuration request message includes the identifier of the N3 channel of the core network.

Optionally, the N4 sensing configuration request message includes sensing indication information, and the sensing indication information indicates that the N3 channel is used to transmit the sensory data.

S1106: The UPF sends an N4 sensing configuration response message to the SMF.

S1107: An SF sends a data channel establishment request message (an example of a third request message) to the AMF.

The data channel establishment request message includes SF address information.

S1108: The AMF sends the data channel establishment request message to the RAN.

S1109: The RAN sends a data channel establishment response message (an example of a third response message) to the AMF.

The data channel establishment response message includes RAN address information.

S1110: The AMF sends the data channel establishment response message to the SF.

S1111: The SF sends a sensing control request message (an example of a first request message) to the AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S1112: The AMF sends the sensing control request message to the RAN.

S1113: The RAN performs the first sensing operation based on the sensing control request message, to generate first data information.

A manner in which the RAN performs the first sensing operation to generate the first data information is similar to that described in the method 300. For brevity, details are not described herein again.

S1114: The RAN sends the first data information to the UPF through a data channel.

Optionally, the first data information further includes data for performing the first sensing operation and the identifier of the first sensing operation.

Optionally, an encapsulation manner of the first data information may be: An N3 channel address between the RAN and the UPF is an outer address, a data channel address between the RAN and the SF is an inner address, and data generated by performing the first sensing operation and/or the identifier of the first sensing operation are/is transmitted data.

S1115: The UPF sends the first data information to the SF.

Therefore, in this application, when the RAN sends the sensory data to the SF via the UPF, N3 interface logic between the RAN and the UPF may be used, to avoid adding a direct interface between the RAN and the SF. In addition, the UPF is more applicable to uploading sensory data per UE. This is compatible with existing logic processing per UE. Furthermore, the SF may initiate establishment of a data channel based on a sensing requirement, to improve flexibility and efficiency of sensory data transmission. The RAN may initiate establishment of an N3 channel, so that one N3 channel can carry a plurality of data channels. In this case, the RAN may establish the N3 channel in advance, and the SF establishes, based on a sensing request, an Nz data channel. This is efficient and flexible.

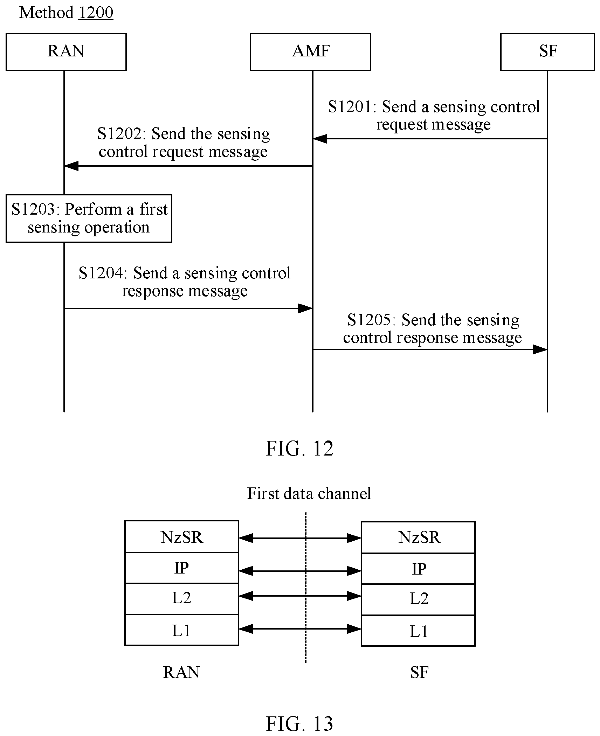

FIG. 12 is a schematic flowchart of a data transmission method 1200.

It should be noted that the method 1200 may also include the operations of steps S501 to S505 in the method 500. For brevity, details are not described herein again.

S1201: An SF sends a sensing control request message (an example of a first request message) to an AMF.

Optionally, the sensing control request message includes an identifier of a first sensing operation.

Optionally, the sensing control request message further includes configuration information of the first sensing operation.

The sensing control request message is similar to that described in the first request message in the method 300. For brevity, details are not described herein again.

S1202: The AMF sends the sensing control request message to a RAN.

S1203: The RAN performs the first sensing operation based on the sensing control request message, to generate first data information.

A manner in which the RAN performs the first sensing operation to generate the first data information is similar to that described in the method 300. For brevity, details are not described herein again.

S1204: The RAN sends a sensing control response message (an example of a first response message) to the AMF.

The sensing control request message includes the first data information.

Optionally, the first data information includes sensory data for performing the first sensing operation and the identifier of the first sensing operation.

S1205: The AMF sends the sensing control response message to the SF.

Therefore, in this application, a method for transmitting sensory data by using a control plane protocol is proposed. A control plane and a data plane use a same protocol. This is simple and efficient. In addition, an existing 5GS interface is compatible and can be reused through AMF forwarding, and compatibility is high, and commercial deployment of the solution provided in this application is facilitated.

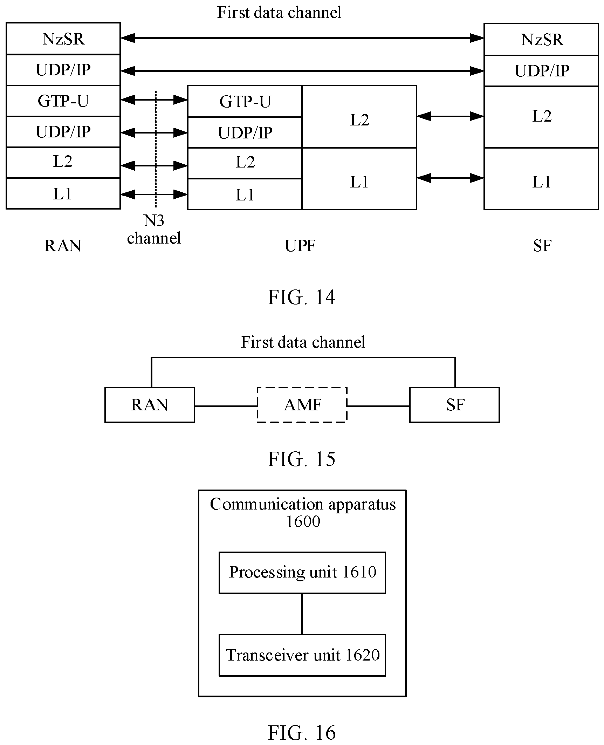

In the foregoing embodiments, the method 500 describes a method in which the RAN directly sends the first data information to the SF by using the data plane without using the UPF. FIG. 13 is a schematic diagram of a protocol interface between a RAN and an SF. The method 600 to the method 1100 describe a method in which the RAN sends the first data information to the SF by using the data plane via the UPF. FIG. 14 is a schematic diagram of a corresponding protocol interface between a RAN and an SF. The method 1200 shows a method in which the RAN sends the first data information to the SF by using the control plane. FIG. 15 is a schematic diagram that is of a protocol interface between a RAN and an SF and that corresponds to the method. An AMF network element is optional.

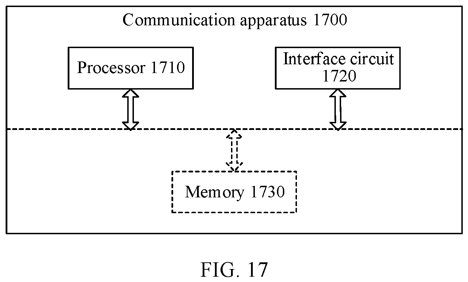

FIG. 16 and FIG. 17 each are a schematic diagram of a possible structure of a communication apparatus according to an embodiment of this application. These communication apparatuses may be configured to implement functions of the first sensing network element, the second sensing network element, and the session function management network element in the foregoing method embodiments. Therefore, the apparatuses can also implement beneficial effects of the foregoing method embodiments. In this embodiment of this application, the communication apparatus may be a first sensing network element, a second sensing network element, and a session function management network element, or may be a module (for example, a chip) applied to a first sensing network element, a second sensing network element, and a session function management network element.

As shown in FIG. 16, a communication apparatus 1600 includes a processing unit 1610 and a transceiver unit 1620. The communication apparatus 1600 is configured to implement functions of the first sensing network element, the second sensing network element, or the session function management network element in the method embodiment shown in FIG. 3 or FIG. 4. Alternatively, the communication apparatus 1600 may include a module configured to implement any function or operation of the first sensing network element, the second sensing network element, or the session function management network element in the method embodiment shown in FIG. 3 or FIG. 4. The module may be all or partially implemented by using software, hardware, firmware, or any combination thereof.

When the communication apparatus 1600 is configured to implement the function of the first sensing network element in the method embodiment shown in FIG. 3, the transceiver unit 1620 is configured to send first address information of the sensing network element to a second sensing network element, and the first address information is used to establish a data channel for transmitting sensory data between the sensing network element and the second sensing network element. The transceiver unit 1620 is further configured to send a first request message to the second sensing network element, and the first request message is used to request the second sensing network element to perform a first sensing operation. The transceiver unit 1620 is further configured to receive first data information that is sent by the second sensing network element through the data channel, and the first data information is generated by the second sensing network element by performing the first sensing operation based on the first request message.

When the communication apparatus 1600 is configured to implement the function of the second sensing network element in the method embodiment shown in FIG. 3, the transceiver unit 1620 is configured to receive first address information of a first sensing network element from the first sensing network element, and the first address information is used to establish a first data channel for transmitting sensory data between the first sensing network element and the second sensing network element. The transceiver unit 1620 is further configured to receive a first request message from the first sensing network element, and the first request message is used to request the second sensing network element to perform a first sensing operation. The transceiver unit 1620 is further configured to send first data information to the first sensing network element through the first data channel. The processing unit 1610 is configured to perform the first sensing operation based on the first request message, to generate the first data information.

When the communication apparatus 1600 is configured to implement the function of the session function management network element in the method embodiment shown in FIG. 3, the transceiver unit 1620 is configured to send a fifth request message to a second sensing network element. The fifth request message is used to request to establish a second data channel for transmitting sensory data between the session function management network element and the second sensing network element, and the second data channel is associated with a first data channel. The first data channel is used by the second sensing network element to send first data information to a first sensing network element, and the first data information is generated by the second sensing network element by performing a first sensing operation. Alternatively, the transceiver unit 1620 is configured to receive a sixth request message from a second sensing network element. The sixth request message is used to request to establish a second data channel for transmitting sensory data between the session function management network element and the second sensing network element, and the second data channel is associated with a first data channel. The first data channel is used by the second sensing network element to send first data information to a first sensing network element, and the first data information is generated by the second sensing network element by performing a first sensing operation.

Therefore, in this application, a first data channel for transmitting the sensory data between the first sensing network element and the second sensing network element may be established, and the second sensing network element may send the first data information to the first sensing network element by using a data plane protocol, to improve a transmission rate and reliability of sensory data transmission.

When the communication apparatus 1600 is configured to implement the function of the first sensing network element in the method embodiment shown in FIG. 4, the transceiver unit 1620 is configured to send a first request message to a second sensing network element, and the first request message is used to request the second sensing network element to perform a first sensing operation. The transceiver unit 1620 is further configured to receive a first response message from the second sensing network element, the first response message includes first data information, and the first data information is generated by the second sensing network element by performing the first sensing operation based on the first request message.

When the communication apparatus 1600 is configured to implement the function of the second sensing network element in the method embodiment shown in FIG. 4, the transceiver unit 1620 is configured to receive a first request message from a first sensing network element, and the first request message is used to request the second sensing network element to perform a first sensing operation. The transceiver unit 1620 is further configured to send a first response message to the first sensing network element, and the first response message includes first data information. The processing unit 1610 is configured to perform the first sensing operation based on the first request message, to generate the first data information.

Therefore, in this application, the second sensing network element may transmit the first data information by using a control plane protocol, and a control plane and a data plane use a same protocol. This can improve efficiency and the reliability of the sensory data transmission.

For more detailed descriptions of the processing unit 1610 and the transceiver unit 1620, directly refer to related descriptions in the method embodiment shown in FIG. 3 or FIG. 4. Details are not described herein again.

As shown in FIG. 17, a communication apparatus 1700 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1700 may further include a memory 1030, configured to: store instructions to be executed by the processor 1010, store input data required by a processor 1710 to run instructions, or store data generated after a processor 1710 runs instructions.

When the communication apparatus 1700 is configured to implement the method shown in FIG. 3 or FIG. 4, the processor 1710 is configured to perform a function of the processing unit 1710, and an interface circuit 1720 is configured to perform a function of the transceiver unit 1720.

When the communication apparatus 1700 is configured to implement the method shown in FIG. 3 or FIG. 4, the communication apparatus 1700 includes the processor 1710 and the interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the method shown in FIG. 3 or FIG. 4, the processor 1710 is configured to perform the function of the processing unit 1710, and the interface circuit 1720 is configured to perform the function of the transceiver unit 1720.

When the communication apparatus is a chip used in a first sensing network element, the chip of the first sensing network element implements the function of the first sensing network element in the method embodiments. The chip of the first sensing network element receives information from another module (for example, a radio frequency module or an antenna) in the first sensing network element, and the information is sent by a second sensing network element or another network element to the first sensing network element. Alternatively, the chip of the first sensing network element sends information to another module (for example, a radio frequency module or an antenna) in the first sensing network element, and the information is sent by the first sensing network element to a second sensing network element or another network element.

When the communication apparatus is a chip used in a second sensing network element, the chip of the second sensing network element implements the function of the second sensing network element in the method embodiments. The chip of the second sensing network element receives information from another module (for example, a radio frequency module or an antenna) in the second sensing network element, and the information is sent by a first sensing network element to the second sensing network element or another network element. Alternatively, the chip of the second sensing network element sends information to another module (for example, a radio frequency module or an antenna) in the second sensing network element, and the information is sent by the second sensing network element to a first sensing network element or another network element.

When the communication apparatus is a chip applied to a session function management network element, the chip of the session function management network element implements the function of the session function management network element in the method embodiments. The chip of the session function management network element receives information from another module (for example, a radio frequency module or an antenna) in another network element, and the information is sent by the another network element to the session function management network element. Alternatively, the chip of the session function management network element sends information to another module (for example, a radio frequency module or an antenna) in another network element, and the information is sent by the session function management network element to the another network element.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk drive, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or instructions may be stored in a computer-readable storage medium, or may be transmitted through a computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape, may be an optical medium, for example, a DVD, or may be a semiconductor medium, for example, a solid-state disk (solid-state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that in this application, "when" and "if" both refer to corresponding processing performed by the network element in an objective case, are not intended to limit time, do not require a determining action to be performed during implementation of the network element, and do not imply that there is any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A sensory data transmission method, wherein the method comprises:
sending, by a first sensing network element, first address information of the first sensing network element to a second sensing network element, wherein the first address information is used to establish a first data channel for transmitting sensory data between the first sensing network element and the second sensing network element;
sending, by the first sensing network element, a first request message to the second sensing network element, wherein the first request message is used to request the second sensing network element to perform a first sensing operation; and
receiving, by the first sensing network element, first data information that is sent by the second sensing network element through the first data channel, wherein the first data information is generated by the second sensing network element by performing the first sensing operation based on the first request message.

2. The method according to claim 1, wherein the method further comprises:
receiving, by the first sensing network element, a second request message from the second sensing network element, wherein the second request message is used to request to establish the first data channel; and
the sending, by a first sensing network element, first address information of the first sensing network element to a second sensing network element comprises:
sending, by the first sensing network element, a second response message to the second sensing network element, wherein the second response message comprises the first address information of the first sensing network element.

3. The method according to claim 1, wherein the sending, by a first sensing network element, first address information of the first sensing network element to a second sensing network element comprises:
sending, by the first sensing network element, a third request message to the second sensing network element, wherein the third request message is used to request to establish the first data channel, and the third request message comprises the first address information of the first sensing network element.

4. The method according to any one of claims 1 to 3, wherein the receiving, by the first sensing network element, first data information that is sent by the second sensing network element through the first data channel comprises:
receiving, by the first sensing network element from a user plane function network element, the first data information that is sent by the second sensing network element to the user plane function network element through a second data channel, wherein the second data channel is associated with the first data channel.

5. The method according to claim 4, wherein the method further comprises:
sending, by the first sensing network element, a fourth request message to a session function management network element, wherein the fourth request message is used to request the session function management network element to establish the second data channel.

6. The method according to claim 5, wherein the method further comprises:
determining, by the first sensing network element, a channel association identifier, wherein the channel association identifier indicates that the second data channel is associated with the first data channel, the fourth request message comprises the channel association identifier, and the second response message or the third request message comprises the channel association identifier.

7. The method according to claim 5, wherein the method further comprises:
receiving, by the first sensing network element, a fourth response message from the session function management network element, wherein the fourth response message comprises a channel association identifier, and the second response message or the third request message comprises the channel association identifier, wherein
the channel association identifier indicates that the second data channel is associated with the first data channel, and the channel association identifier is determined by the session function management network element or the second sensing network element.

8. The method according to any one of claims 1 to 7, wherein the first request message further comprises identification information indicating the first sensing operation, the first data information comprises first sensory data generated by performing the first sensing operation and an identifier of the first sensing operation, and the identifier of the first sensing operation indicates that the first sensory data corresponds to the first sensing operation.

9. The method according to claim 8, wherein the method further comprises:
receiving, by the first sensing network element, a sensing requirement message; and
generating, by the first sensing network element, the identification information of the first sensing operation based on the sensing requirement message; and
the sending, by the first sensing network element, a first request message to the second sensing network element comprises:
sending, by the first sensing network element, the first request message to the second sensing network element based on the sensing requirement message, wherein the first request message comprises the identification information of the first sensing operation.

10. A sensory data transmission method, wherein the method comprises:
receiving, by a second sensing network element, first address information of a first sensing network element from the first sensing network element, wherein the first address information is used to establish a first data channel for transmitting sensory data between the first sensing network element and the second sensing network element;
receiving, by the second sensing network element, a first request message from the first sensing network element, wherein the first request message is used to request the second sensing network element to perform a first sensing operation;
performing, by the second sensing network element, the first sensing operation based on the first request message, to generate first data information; and
sending, by the second sensing network element, the first data information to the first sensing network element through the first data channel.

11. The method according to claim 10, wherein the method further comprises:
sending, by the second sensing network element, a second request message to the first sensing network element, wherein the second request message is used to request to establish the first data channel; and
the receiving, by a second sensing network element, first address information of a first sensing network element from the first sensing network element comprises:
receiving, by the second sensing network element, a second response message from the first sensing network element, wherein the second response message comprises the first address information of the first sensing network element.

12. The method according to claim 10, wherein the receiving, by a second sensing network element, first address information of a first sensing network element from the first sensing network element comprises:
receiving, by the second sensing network element, a third request message from the first sensing network element, wherein the third request message is used to request to establish the first data channel, and the third request message comprises the first address information of the first sensing network element.

13. The method according to any one of claims 10 to 12, wherein the sending, by the second sensing network element, the first data information to the first sensing network element through the first data channel comprises:
sending, by the second sensing network element, the first data information to the first sensing network element via a user plane function network element, wherein there is a second data channel for transmitting sensory data between the second sensing network element and the user plane function network element, and the second data channel is associated with the first data channel.

14. The method according to claim 13, wherein the method further comprises:
receiving, by the second sensing network element, a fifth request message from a session function management network element, wherein the fifth request message is used to request to establish the second data channel.

15. The method according to claim 14, wherein the fifth request message comprises sensing indication information, and the sensing indication information indicates that the second data channel is used to transmit the sensory data.

16. The method according to claim 14, wherein the fifth request message comprises a channel association identifier, the third request message or the second response message comprises the channel association identifier, the channel association identifier indicates that the second data channel is associated with the first data channel, and the channel association identifier is determined by the first sensing network element.

17. The method according to any one of claims 10 to 16, wherein the first request message further comprises identification information indicating the first sensing operation, the first data information comprises first sensory data generated by performing the first sensing operation and an identifier of the first sensing operation, and the identifier of the first sensing operation indicates that the first sensory data corresponds to the first sensing operation.

18. A sensory data transmission method, wherein the method comprises:
sending, by a session function management network element, a fifth request message to a second sensing network element, wherein the fifth request message is used to request to establish a second data channel for transmitting sensory data between the session function management network element and the second sensing network element, the second data channel is associated with a first data channel, the first data channel is used by the second sensing network element to send first data information to a first sensing network element, and the first data information is generated by the second sensing network element by performing a first sensing operation.

19. The method according to claim 18, wherein before the sending, by a session function management network element, a fifth request message to a second sensing network element, the method further comprises:
receiving, by the session function management network element, a fourth request message from the first sensing network element, wherein the fourth request message is used to request the session function management network element to establish the second data channel.

20. The method according to claim 19, wherein the fourth request message and the fifth request message comprise a channel association identifier, the channel association identifier indicates that the second data channel is associated with the first data channel, and the channel association identifier is determined by the first sensing network element or the second sensing network element.

21. The method according to any one of claims 18 to 20, wherein the fifth request message comprises sensing indication information, and the sensing indication information indicates that the second data channel is used to transmit the sensory data.

22. A sensory data transmission method, wherein the method comprises:
receiving, by a session function management network element, a sixth request message from a second sensing network element, wherein the sixth request message is used to request to establish a second data channel for transmitting sensory data between the session function management network element and the second sensing network element, the second data channel is associated with a first data channel, the first data channel is used by the second sensing network element to send first data information to a first sensing network element, and the first data information is generated by the second sensing network element by performing a first sensing operation.

23. The method according to claim 22, wherein the sixth request message comprises sensing indication information, and the sensing indication information indicates that the second data channel is used to transmit the sensory data.

24. A sensing network element, comprising:
a sending unit, configured to send first address information of the sensing network element to a second sensing network element, wherein the first address information is used to establish a data channel for transmitting sensory data between the sensing network element and the second sensing network element, and
the sending unit is further configured to send a first request message to the second sensing network element, wherein the first request message is used to request the second sensing network element to perform a first sensing operation; and
a receiving unit, configured to receive first data information that is sent by the second sensing network element through the data channel, wherein the first data information is generated by the second sensing network element by performing the first sensing operation based on the first request message.

25. A sensing network element, comprising:
a receiving unit, configured to receive first address information of a first sensing network element from the first sensing network element, wherein the first address information is used to establish a data channel for transmitting sensory data between the sensing network element and a second sensing network element, and
the receiving unit is further configured to receive a first request message from the first sensing network element, wherein the first request message is used to request the second sensing network element to perform a first sensing operation;
a processing unit, configured to perform the first sensing operation based on the first request message, to generate first data information; and
a sending unit, configured to send the first data information to the first sensing network element through the data channel.

26. A session function management network element, comprising:
a sending unit, configured to send a fifth request message to a second sensing network element, wherein the fifth request message is used to request to establish a second data channel for transmitting sensory data between the session function management network element and the second sensing network element, the second data channel is associated with a first data channel, the first data channel is used by the second sensing network element to send first data information to a first sensing network element, and the first data information is generated by the second sensing network element by performing a first sensing operation.

27. A session function management network element, comprising:
a receiving unit, configured to receive a sixth request message from a second sensing network element, wherein the sixth request message is used to request to establish a second data channel for transmitting sensory data between the session function management network element and the second sensing network element, the second data channel is associated with a first data channel, the first data channel is used by the second sensing network element to send first data information to a first sensing network element, and the first data information is generated by the second sensing network element by performing a first sensing operation.

28. A sensory data transmission system, comprising the sensing network element according to claim 24 and the sensing network element according to claim 25.

29. The system according to claim 28, wherein the system further comprises the session function management network element according to claim 26 or the session function management network element according to claim 27.
